# EUROPEAN PATENT APPLICATION

(11) **EP 4 621 587 A1**
(43) Date of publication of application: **24.09.2025**
(21) Application number: 25164335.9
(22) Date of filing: 18.03.2025
(51) Int. Cl.: G06F 16/25, G06F 16/908, G06F 16/172

(54) **SYSTEMS AND METHODS FOR PREDICTIVELY INDEXING DATA IN A DATA MANAGEMENT SYSTEM UTILIZING A PREDICTIVE MODEL**

(30) Priority: 18.03.2024 US 202463566608 P
(71) Applicant: Zigguratum, Inc., Dover DE Delaware 19904 (US)
(72) Inventor: WEBSTER, George Davis, III, Sevenoaks, TN13 1RR (GB); VON PENTZ, Aurelia Zoe Eva, London, SE10 8FN (GB)
(74) Representative: Betten & Resch

(57) **Abstract**

Embodiments may index or structure data and associated schemas for data management based on statistical modeling, machine learning, or other models based on user behavior and application dependencies or usage. In embodiments of this approach, sets of data that may be needed may be predicted, and these set of data indexed for different aspects or functionality of as required.

## Description

### RELATED APPLICATION(S)

The present application claims the benefit of priority of United States Provisional Patent Application No. 63/566,608 filed March 18, 2024, entitled "Systems and Methods for Data Management Using Predictive Modeling With Large Language Models," which is hereby fully incorporated by reference herein.

### COPYRIGHT NOTICE

A portion of the disclosure of this patent document contains material to which a claim for copyright is made. The copyright owner has no objection to the facsimile reproduction by anyone of the patent document or the patent disclosure as it appears in the Patent and Trademark Office patent file or records but reserves all other copyright rights whatsoever.

### TECHNICAL FIELD

This disclosure relates generally to data management. In particular, this disclosure relates to the use of predictive modeling and large language models to enhance aspects of data management. Even more specifically, this disclosure relates to the use of predictive modeling and large language models to improve the creation of data storage schemas for data sources within such data management systems, and the ingest and indexing of data from data sources according to such schemas.

### BACKGROUND

In the era of vast and complex datasets, data management systems are crucial for the efficient storage and processing of such large volumes of data, including the indexing of such data for search, analysis or use by other applications. Traditional data management systems and methods often struggle to keep pace with the ever-growing volume and intricacy of data.

Specifically, in the past these data management problems have been addressed either by providing increasing amounts of money and compute capabilities for data management systems to employ map reduce or similar algorithms under a defined structure based on current use cases, or by indexing all the relevant data. This decision was left to either the discretion of the system builder or the system user. As data volumes are rising exponentially around the world, this solution is becoming unsustainable and resource scarcity is rising.

A microcosm of these problems occurs in the context of cybersecurity. Modern cybersecurity (e.g., detection and response cybersecurity applications) is based on searching through large quantities of data. This is typically handled by processing large volumes of data into a searchable format in an index, that then has late-binding schemes attached. For detecting cybersecurity events, a series of predefined searches are continuously executed and during investigations a user will perform a series of undefined searches.

This data processing methodology creates an all or nothing situation for processing the data, and processing is expensive both from a time and money perspective. Furthermore, because searches in these data management systems typically scan an entire available index, these operations are inefficient for performing queries across multiple indexes and making determinations. This architecture significantly hinders what can be built on top of data management platforms including placing limits on the number of indexes that can be used for analytics and multi-corollary operations because of time and cost. Another issue with these data management architecture for cybersecurity is that detection of cybersecurity events can only occur after the data is processed, which degrades in performance as data volume sizes increase.

Another typical approach to supporting data management in these large data volume scenarios is through early binding schemes. These schemes place the data into a structure that is organized based on predefined rules, early-binding such data based on those rules. This approach has the benefit that data can be efficiently retrieved and supports analytics and multi-corollary operations. But creating an early-binding scheme is largely a manual task and can take months per data sets and constantly require manual adjustments as systems get updated and changed. And the data sets for certain contexts (e.g., cybersecurity) are in the hundreds, thousands, or more. Furthermore, this early binding approach also struggles with supporting various needs in the context of cybersecurity because of the non-deterministic nature of events in the cybersecurity context, leaving a user to either rely on an inefficient system that can support their critical use cases or having to create a wholly independent system to support a general search platform for the support of analytics and application development.

As may be realized, then, the issues present in the context of cybersecurity, and the attempted solution to those issues, may be prevalent in a wide variety of other data management scenarios as well. In particular, data management solutions may attempt to combine different data backends for optimization, especially with respect to the indexing of such data in various aspects. This is commonly seen in three forms. In the first, data is placed in different data backends and schemas based on type. For example, structured data in textual form will be placed in a relational database under a defined schema while files will be located in a key-value store that is optimized for large objects (e.g., Postgres with s3).

In the second form, data is stored under an extended schema, in the form of materialized views. Under this method, additional fields are the results of query functions performed across the base table, precomputing the results for optimized reading. In a third form fields (such as a primary or secondary keys) of data in a structured database are processed and stored in a secondary location to enable unstructured search lookups (e.g., Cassandra with Stable-Attached Secondary Indexing (SASI) enabled). In these cases, the movement of data between the elements is manually predefined by the system designer.

These types of data management solutions that have heretofore been employed have proved problematic. What is desired are systems and methods for data management that can reduce processing and storage requirements, thereby significantly reducing use of processing and storage resources, increasing scalability, and generally overcoming the limitations of previous approaches to data management.

### SUMMARY

To elaborate on the problems discussed above, data ingestion is one of the epicenters of the issues involved with managing large data sets. One of the main purposes of data ingestion is to place the data in a form in which it can be meaningfully utilized. The typical approach is to either place the data in some structure that was determined a priori before ingestion of the data occurred. For example, data to be ingested may be provided to a human data engineer who may take months to analyze the data and compose a structure (e.g., a schema or the like) in which ingested data can be placed. Not only is such a process time consuming, but additionally, the data engineer is operating from one particular view of the data at one particular time (e.g., a particular type of data or a particular version of data) and from a particular view or goal of how that data is to be utilized (e.g., a particular application that may utilize the data). Thus, the structure determined by this data engineer may be expressly tailored to that view of the data and those goals. Accordingly, the structure obtained from such a process is static and therefore sclerotic. As this developed structure is tightly stitched to that particular type or version of data or how that data is to be utilized it is poorly suited to be adapted to other types of versions of data or to other goals.

The other typical process to data ingestion is just to create a huge index of all the incoming data without putting the data into any structure whatsoever. While this allows the data to be searched, it is time consuming, and as a practical matter completely unscalable. As indexing time (and storage consumption) may grow exponentially with the amount of data being ingested, and it is estimated that data volumes are growing at, or near, 50% per annum, such a methodology is unsustainable.

Additionally problematic is that in both these approaches to data ingestion all data that is ingested is processed at the time of ingest, to either extract desired data and place the data in the predetermined structure, or to index all the incoming data. This consumes both time and computing resources.

Embodiments as disclosed herein significantly ameliorate these issues by using a semantic layer to illuminate the data with a semantic context when, and as, needed. The data can then be ingested without either structuring all the incoming data or fully indexing the ingested data. Thus, embodiments may contextualize ingested data without having to structure or index all the data being ingested. Instead, ingested data may be stored in a raw format in a simple inexpensive data storage mechanism, and only needed data may be indexed (e.g., predictively or when needed). Additionally or alternatively, ingested data may be processed to only structure needed data based on actual use cases for that data (e.g., in accordance with the actual applications that may utilize this data). Moreover, the structure of such data may be tailored to those use cases or the context of such data.

In this manner, embodiments may provide a robust, efficient, adaptable, and scalable mechanism for simply and efficiently ingesting data to contextualize data during ingest based on a semantic layer. This context (e.g., and the semantic layer) may then be utilized to index only the portions of the data that need be indexed, or to extract, process and structure only data that needs to be extracted and structured based on actual use cases for that data (e.g., while also structuring that data according to structures that may be tailored to those use cases). Consequently, as needs for data change (e.g., searches for data change or use cases for the data changes) or the data itself changes (e.g., new types or versions of data or received) embodiments may easily adapt to this new data or new use cases, as the indexing and structuring of data in embodiments is based on the context of such data as determined by the semantic layer during ingest and are not themselves accomplished during ingest.

To illustrate in more detail, embodiments of data management systems as discussed herein may address the issues discussed above, among others by providing novel systems and methods that leverage predictive modeling based on large language models to optimize data management. Such embodiments may leverage preprocess indices and structured database schemas based on statistical modeling, machine learning, and large language models based on user behavior and downstream application dependencies to efficiently balance between early or late binding schemes for data, while also only processing the data when it is necessary for usage to reduce computation costs and an improved interactive user experience.

In particular, embodiments may allow the rapid and efficient indexing, search, or access to data by individual users or applications that may be implemented with a reasonable or sustainable amount of resource usage or cost. Specifically, embodiments of data management systems as disclosed may utilize predictive modeling and large language models to provide a consistent semantic layer that may be utilized across aspects of the data management system to improve the functionality of such aspects.

As such embodiments as disclosed herein may provide an efficient and speedy end-to-end data management systems that have one or more of the following components, functionality or advantages. In one embodiment, a data management system may include a data onboarding and predictive modeling component that streamlines the addition of new datasets using dynamic ingest pipelines which adapts data ingestion to real-time needs, allowing dynamic adjustments based on data use cases. Predictive models analyze sample data and its context, reducing reliance on data engineers. Embodiments of the system may also include a data store component that utilizes raw and refined data lakes, ensuring cost-effective storage and quick retrieval. Embodiments may also include data shimming which aims to reduce resource usage by managing expensive data types like firewall logs more efficiently.

Some embodiments of the data management systems as disclosed may utilize context-driven data management that allows the data management system to focus on understanding data in its specific context to improve data handling relevance and efficiency. Such context driven data management may employ a semantic (knowledge) layer that interprets and contextualizes data, enhancing understanding and usage. Embodiments may also utilize real-time analytics and data routing. This real-time analytics may include a real time execution engine for substantial immediate insights and sparse field extraction for efficient data routing, catering to diverse data use cases. Embodiments may enable users to develop applications within the ecosystem of the data management platform, with the data management system providing relevant data and structures. In particular, embodiments may utilize the semantic layer to produce and provide semantics utilized by the semantic layer of the data management system to make such semantics available for applications to utilize, allowing for the portability of applications developed for the data management platform and the integration of the data management system with these user applications and user's systems. This capability may increase operational efficiency by reducing the time and cost involved with data usage while minimizing complexity and avoiding vendor lock-in for application development or deployment. As but one example, such semantics may be made available in a software development kit (SDK) that such that these semantics can be made available for inclusion by developers of applications such that applications can be based directly on the provided semantics.

To illustrate aspects of such data management systems in more detail, embodiments may index and structure database schemas for data management based on statistical modeling, machine learning, or large language models based on user behavior and downstream application dependencies and usage to reduce computation costs and an improved interactive user experience. In embodiments of this approach, the semantic layer may be used to identify sets (e.g., per field, time range) of data that may need to be located based on system needs and human behavior. These fields can then be processed as required for the different aspects of functionality of the data management system (e.g., real time analytics or search) as required. By basing the processing on actual usage the pre and post processing resource usage may be significantly reduced. Furthermore, predicting when datasets are required to be in a searchable form for exploration has the added benefit of reducing the perceived processing delay by the end user.

Embodiments of the use of the semantic layer by such a data management system may employ a predictive model that uses selective indexing; namely, that data that may be requested by data users may be (e.g., predictively) indexed (e.g., indexed for search in advance of an actual request for such a data set). Accordingly, instead of a human system builder or user manually deciding on which data to index based on current need, or all data being indexed, a machine learning model (e.g., a large language model) may be trained on data such as past or ongoing user behavior or searches, data usage by applications interacting with the data management system or other training data, to automate this predictive indexing (e.g., in a continuous feedback loop).

To illustrate in more detail, when a new dataset is onboarded in the data management system, data associated with the data set (e.g., example data from a data source or contextual data provided by a user) can be analyzed by a (e.g., large language) model to determine definitions or schemas or to determine which fields (e.g., columns of a database) should be indexed based on previous user demands. Users of the data management system may subsequently query the dataset, where their searches include clauses that specify which fields they will search, and in what manner (comparison, full-text, etc.). These user searches may be utilized to train the model (e.g., which searches are commonly performed (e.g., for which data fields and over what time periods, etc.). The model may be used to evaluate these searches in conjunction with the determined schema or structure of the data to determine which data to index (e.g., to add or remove indexed data from a data index of the data management system. The model can be continuously improved and retrained.

Embodiments as disclosed herein may therefore have a number of advantages. Generally, embodiments may provide the advantages of reducing that time and cost involved in data management through automation, enhancing data comprehension with a semantic layer, optimizing data storage and retrieval with advanced search functions, optimizing real time analytics for immediate insights or data usage and the ability to develop and deploy portable, scalable applications.

More specifically, the user experience for the end user is improved by predicting when data needs to be computed into a searched format thereby reducing wait time from user action to results. Resource usage is reduced by only performing the computation necessary to enable user driven searching (e.g., late binding scheme) across large datasets. Resource usage is reduced by only performing the computation necessary to enable structured (e.g., early binding scheme) data driven application and user interaction. The time required for onboarding and operationalizing data is reduced by removing (or substantially reducing) manual intervention required to perform complex data management tasks. The use of data and system specialists involved with data management may be reduced or removed by reducing the complexity of data management system operation and configuration.

In one embodiment, a data can be indexed for search in a data management system by storing raw data received from one or more data sources in the form data is received from each of the one or more data sources. A set of predicted data sets n be generated based on a predictive model, wherein each of the predictive data sets is associated with a criteria and a time period. The predictive model can include, for example, a cluster based model or a large language model (LLM).

In advance of any request for that data, stored raw data associated with selected ones of the set of predicted data sets can be obtained based on the criteria and time period and the obtained raw data indexed for search at the data management system.

In some embodiments, generating the set of predictive data sets utilizing a cluster based model comprises clustering search data associated with users' interaction with the data management system based on one or more dimensions. Generating the set of predictive data sets may alternatively or additionally comprise generating a prompt for the LLM requesting predictive data sets, wherein the prompt includes search data associated with the users' interaction with the data management system.

In particular embodiments, a set of predictive data sets includes a first set of predictive data sets generated from the cluster based model, and a second set of predictive data sets generated using the LLM, and wherein the selected ones of the set of predictive data sets are selected based on a likelihood weighting derived from an overlap between the first set of predictive data sets and the second set of predictive data sets.

In certain embodiments, the one or more data sets are ranked based on a likelihood weighting, and the selected ones of the set of predictive data sets are selected based on the likelihood weighting

In some embodiments, the likelihood weighting for each of the set of predictive data sets is based on a cluster size associated with that predictive data set.

These, and other, aspects will be better appreciated and understood when considered in conjunction with the following description and the accompanying drawings. The following description, while indicating various embodiments and numerous specific details thereof, is given by way of illustration and not of limitation. Many substitutions, modifications, additions or rearrangements may be made within the scope of the disclosure, and the disclosure includes all such substitutions, modifications, additions or rearrangements.

### BRIEF DESCRIPTION OF THE FIGURES

The drawings accompanying and forming part of this specification are included to depict certain aspects of the invention. A clearer impression of the invention, and of the components and operation of systems provided with the invention, will become more readily apparent by referring to the exemplary, and therefore nonlimiting, embodiments illustrated in the drawings, wherein identical reference numerals designate the same components. Note that the features illustrated in the drawings are not necessarily drawn to scale.
FIGURE 1 is a block diagram of an embodiment of a data management system.
FIGURES 2A, 2B, and 2C are depictions of semantic models according to embodiments.
FIGURE 3 is a block diagram of an embodiment of a data management system.
FIGURES 4A-4D are flow diagrams of embodiments of methods for generating schemas and ingest pipeline for a data management system.
FIGURES 5A, 5B, and 5C are flow diagrams of embodiments of methods of generating an ingest pipeline for a data management system.
FIGURES 5D and 5E are a depiction of an example of data extraction functions for a data schema according to an embodiment.
FIGURE 6 (comprising FIGURES 6A and 6B) is a block diagram of an embodiment of a search system for a data management system.
FIGURE 7 is a flow diagram depicting an embodiment of a method for indexing data for search in a data management system.
FIGURE 8 is a flow diagram of one embodiment of a method of the indexing of data for search in a data management system.
FIGURE 9 is a block diagram of an embodiment of an analytics system for a data management system.

### DETAILED DESCRIPTION

The invention and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure the invention in detail. It should be understood, however, that the detailed description and the specific examples, while indicating some embodiments of the invention, are given by way of illustration only and not by way of limitation. Various substitutions, modifications, additions and/or rearrangements within the scope of the underlying inventive concept will become apparent to those skilled in the art from this disclosure.

Before delving into more detail regarding the specific embodiments disclosed herein, some additional context may be helpful. Data management systems are crucial for the efficient storage and processing of such large volumes of data, including the indexing of such data for search, analysis or use by other applications. Traditional data management systems and methods often struggle to keep pace with the ever-growing volume, complexity, and intricate nature of data. While this situation exists for a number of reasons, in the main, the situation is due to the fact that the number of potential data sources for data is increasing at an exponential rate. This is because as an enterprise grows the number of sources of potential data sources from within that enterprise grow commensurately (e.g., the physical or virtual devices or applications within the enterprise's Information Technology (IT) infrastructure may increase as the enterprise grows). Moreover, the amount of data from these data sources may likewise grow as the enterprise grows, entailing the growth of data on, or flowing amongst, these device or applications (e.g., increased network traffic leads to increased events or logs on network infrastructure devices such as firewalls or the like, etc.).

Complicating the situation further, each of those data sources may organize, store, or provide heterogeneous data (e.g., different types of data) in any number of heterogeneous manners (e.g., different data formats). From a data management perspective all of this is highly undesirable, the processing of large amounts of heterogeneous data may entail storing the data according to these different formats and processing the data according to the specific types and formats provided from the data sources. This is a time and resource intensive process.

More importantly, a user wishing to access or utilizing the data obtained from these differing data sources may be required to learn about both the format of the data provided by each data source so that the data can either been converted from the original format into another format that may be consumed (e.g., searched, used by an application or other subsystem or otherwise processed) or, alternatively, an application or other subsystem may be designed or configured to use the data as it appears in its original format form the data source. This is an incredibly time consuming and intensive process, as either the application may have to be configured to utilize multiple different data formats, or a data conversion process may have to account for the conversion of those multiple different data formats into another format. Accordingly, in the past these data management problems have been addressed either by providing every increasing amounts of computing capabilities and resources for data management systems to employ map reduce or similar algorithms under a defined structure based on a current use case, or by indexing all the relevant data to put it into a consumable format. As mentioned, data volumes are rising exponentially around the world, thus these types of solutions are unsustainable, and prohibitively resource intensive.

Moreover, and importantly, these types of architectures are an incredibly brittle foundation on which to structure systems or applications that use data from data sources in an enterprise, as they intimately and intrinsically ties the storage, processing and usage of an enterprise's data to a static state of an enterprise at a particular ephemeral moment. A large enterprise's infrastructure is continually in flux as the topologies, data, sources, uses, etc. constituting that infrastructure are altered. Thus, as the infrastructure is altered, the systems that are tied to the state of an infrastructure of the enterprise (e.g., the data sources, data formats, etc.) at a different moment in time may break. This break causes a cascading effect whereby all the systems and applications reliant on data from those data sources may similarly break.

To illustrate in more detail, a particular example may prove useful. Namely, a microcosm of the aforementioned problems occurs in the context of cybersecurity. As may be realized, the issues present in the context of cybersecurity, and the attempted solutions to those issues, may be prevalent in a wide variety of other data management scenarios as well. Modern cybersecurity (e.g., detection and response cybersecurity applications) is typically based on searching through large quantities of data. In data management systems processing such cybersecurity data this is usually handled by processing those large volumes of data into a searchable format (e.g., including an index) that then may have late-binding schemes attached. For detecting cybersecurity events, a series of predefined searches are continuously executed. During user driven investigations a user can perform a manual series of undefined searches.

This data processing methodology creates an all or nothing situation for processing the data, and processing is expensive both from a time and resource perspective as all data must be processed, regardless of whether it is actually ever used in a predefined or undefined search. Furthermore, because searches in these data management systems typically scan an entire available index, these operations are inefficient when performing queries, as a large index (or multiple indices) comprising the (e.g., entire set of) data must be searched to make an accurate determination. This architecture significantly hinders what can be built on top of these types of data management platforms as limits may exist on the number of indexes that can be used for analytics and multi-corollary operations because of time and or excessive resource utilization. Another problematic issue with these data management architectures (especially in a cybersecurity context) is that detection of cybersecurity events can only occur after data from the data source has been fully processed, which degrades in performance as a function of data volume.

Another typical approach to supporting data management in these large data volume scenarios such as cybersecurity is through early binding schemes. This approach struggles with supporting various needs because of the non-deterministic nature of events in those contexts, leaving a user to create independent systems to support a general search platform for the support of analytics and application development.

Data ingestion is thus a central concern of managing large data sets. One of the main purposes of data ingestion is to place the data in a form in which it can be meaningfully utilized. The typical approach is to place the data in some structure that was determined a priori before ingestion of the data occurred. Not only are such processes and structures time consuming and resource intensive, but additionally, these types of systems operate from one particular view of the data at one particular time (e.g., a particular type of data or a particular version of data) and from a particular view or goal of how that data is to be utilized (e.g., a particular application that may utilize the data). Thus, the structure determined by a data engineer may be expressly tailored to one specific view of the data and one particular set of goals. Accordingly, the structure obtained from such a process, and applications designed to use such structures, are static and therefore sclerotic: as the developed structures and applications are tightly stitched to that particular type or version of data or how that data is to be utilized, it is poorly suited to be adapted to other types of versions of data or to other goals.

The other typical process to data ingestion is to create one large index (or multiple large indices) of all the incoming data without putting the data into any structure whatsoever. While this allows the data to be searched, it is time consuming, and as a practical matter completely unscalable from a resource perspective. As indexing time (and storage consumption) may grow exponentially in relation to the amount of data being ingested, and it is estimated that data volumes are growing at nearly 50% per annum (and are anticipated to grow at a greater pace in the future), such a methodology is unsustainable. Additionally problematic is that in both these approaches to data ingestion require all data that is ingested to be processed at the time of ingest, to either extract desired data and place the data in the predetermined structure, or to index all the incoming data, regardless of whether it is utilized. This consumes both time and computing resources, often unnecessarily.

As can be seen then, some of the main problems that have been discussed with respect to current data management solutions involve the use of schemas that are ill suited to both the data which is being received from the data sources and for applications which may utilize that data while additionally requiring the processing of all data that is received from all data sources in one manner or another to allow it to be utilized by the data management system (or other systems or applications that obtain data from the data management system).

There are, however, other pressing issues with respect to these data management systems that relate not only to how data is processed, but also how data is understood. As discussed, applications and searches that are implemented based on a particular schema or data format are highly prone to breakage. It would thus be desirable to be able to interact with data (e.g., design applications that utilize data or search data) in a manner that is not directly tied to particular schemas or formats (e.g., utilized by the data sources originating such data). Specifically, at a conceptual level, users may desire to interact with data from various data sources based on the type, or meaning, of such data. In other words, users may wish to interact with data by specifying the semantics (e.g., meanings) of the data they desire. In this manner, they may be able to specify the data they would like to access or utilize without necessarily referring to (and without regards to) the underlying schemas or formats in which the data is received from a data source or stored at a data management system, and in some cases without respect to the data source from which that data originates. This capability would ostensibly allow users (e.g., human users or machine users such as applications or the like) to interact with data based on the semantics of the data such that data that is semantically associated may be accessed, interacted with, manipulated, utilized, etc. as a data set regardless of the data source from which that data originated.

The ability to allow such semantics based interaction, however, requires that some semantic knowledge be interposed on data from the various data sources such that this imposed semantic knowledge can provide a layer of abstraction from the data itself, and may be used to associate data (e.g., from different sources or of different formats or types) based on the semantics associated with that data. This is a non-trivial task. Most semantic models are quite complex. Moreover, as the data coming from these various data sources is not typically natural language, typical techniques for the automated semantic analysis of data schemas may prove less than useful.

As such, the ability of data management systems to assign semantics to data from a large number of heterogeneous data sources in an enterprise computing environment currently relies on the mapping of individual data points (e.g., fields) of data received from a data source to its associated semantics. To perform such mapping users (e.g., data engineers) must usually manually review the data format or schema used by each individual data source and manually assign a semantic definition or type to each individual data point to each individual data source. This requires that users have an extraordinarily intimate knowledge of both the data schemas of individual data sources and the semantic model being utilized.

As may be realized, even assuming this mapping could be manually done across many different types of data sources and an extremely large semantic model, this solution does not solve the problems discussed above. Namely, such a solution would still be prone to breakage, and would require the processing of all data from the data sources according to the established mappings, and the storage of all such mapped data, in order for that data to be utilized by consumers of data according to those semantics. Any change or alteration in the underlying schemas used by the data sources (e.g., when they are upgraded, replaced with a device or application from a different vendor, etc.) would cause the manually established mapping to break down and require the significant effort of manual remapping to once again take place.

Importantly as well, in such systems all data from all data sources must still be processed to associate each data point of data received from the data source with the mapped semantics, and all of those mapped semantics stored in association with all of those data points, at the data management system. So, the current methodology of associating data from these data sources with any sort of semantics actually requires even longer processing times and even greater storage requirements than data management systems that do not employ such semantics.

These long processing times have additional adverse side effects. In these types of data management systems that do employ some form of semantics, the imposition of semantics on the data requires such a large amount of time and processing resources (e.g., because all the data from all the data sources must be processed according to all the semantic mappings) that it is usually the case that data from the various data sources cannot be consumed according to those semantics in a dynamic or real-time manner. Instead, it is typically the case that the data from the data sources must undergo the processing to perform the semantic mapping, and the data stored with the assigned semantics, before the data can be utilized according to those semantics. This delay usually means that this data cannot be utilized in a dynamic or real time manner by application or the like. In many environments in which time is of the essence, and where it is thus desired to operate substantially in a real time or dynamic environment (e.g., cybersecurity), these performance issues definitively rule out the use of such data management systems.

As can be seen, there are myriad problems and issues with current systems and methods for data management. What is desired, then, are systems and methods for data management that can impose semantic meaning on data from a large number of heterogeneous data sources in a manner that allows systems or applications consuming that data to access that data according to those semantics, including dynamically or in real time, while simultaneously reducing processing and storage overhead and requirements, increasing scalability, and generally overcoming the limitations and issues endemic to previous approaches to data management.

To address those ends, among others, embodiments of data management systems disclosed herein use a semantic layer to illuminate data from a large number of (e.g., heterogeneous) data sources with a semantic context based on a semantic model and provide this contextualized data to various systems or applications that make use of that data. These data sources may comprise any source of data that can be identified with a point of origin such as network infrastructure devices, network management systems, software services, applications, logs, etc. The semantic model utilized by embodiments may be a multi-tiered semantic model, where each of the tiers may comprise a set of concepts for semantically normalizing data. The tiers comprising the semantic model may be ordered based on the level of abstraction represented by each tier (e.g., from more specific to more general or abstract) such that the first tier of the semantic model may represent more specific concepts for data normalization while the last tier of the semantic model may comprise the most general or abstract concepts for semantic normalization of data. The concepts included in each tier of the semantic model may be mapped (e.g., associated with) one or more concepts in a subsequent (e.g., more abstract) tier in the semantic model. As may be imagined there may be almost any number of intervening tiers between a first tier and a (most abstract) semantic tier of a semantic model. Moreover, there may be additional layers of a semantic model, such as layers including representation of applications that may consume data or how data is to be presented.

In one embodiment, a semantic model may include a (e.g., least abstract) first tier comprising a raw data or data source tier including a number of concepts representing specific sources of data, (e.g., including the data schemas, fields, specific device configurations, models or versions of software, specific services or programs, etc. of those data sources), and a (more abstract) semantic tier comprising a number of concepts representing the normalization of the semantics of data, such as concepts representing a type of the data, or a type of data source from which data can originate. Concepts associated with specific data sources can thus be defined in a least abstract layer and individual data sources associated with those concepts. In some embodiments, there may be one or more middle tiers of the semantic model that represent varying levels of abstraction, such as a (source generic) tier representing generic data sources and including concepts that group data sources by criteria associated with those data sources including, for example, vendor criteria, manufacturer criteria, hardware criteria, software criteria (e.g., software type or version), criteria associated with a type of data provide, interface criteria, or other criteria.

In some cases, the semantic tier of the semantic model may be domain or context specific such that the concepts of that semantic tier may be associated with (e.g., useful to) a particular domain or context (e.g., such as cybersecurity or the like). Thus, data from those same data sources may easily be re-contextualized by using semantic tiers associated with different domains or contexts and mapping those semantic tiers to a previous (less abstract) tier in the hierarchy of tiers comprising the semantic model.

In this manner, the semantic model utilized by embodiments may be thought of, or represented as, a graph, where each tier of the semantic model comprises a set of nodes representing the concepts associated with that tier and the mappings between the concepts of each tier are represented by edges of the graph. In particular, the semantic model used by embodiments may be thought of as a directed graph, where the set of nodes representing the concepts in a more specific tier are joined by directed edges to the one or more nodes representing concepts in a subsequent, more abstract, tier to which those nodes are mapped (e.g., a directed edge is included in the graph from a node in a less abstract tier to corresponding node in the more abstract tier to which the node of the less abstract tier is mapped). By mapping data sources to concepts (e.g., nodes) in the least abstract layer in the first tier of semantic concepts, such a semantic model may be traversed (e.g., in a reverse direction) to determine all data sources associated with any semantic concepts in the most abstract tier.

Thus, according to embodiments, these types of semantic models may form the basis for a semantic layer that is diffused through embodiments of the data management systems disclosed herein. According to various embodiments this semantic layer may comprise the semantic model along with other semantic data (also referred to herein as semantic knowledge) such as predictive models (e.g., Large Language Models), use cases defining how or what data is to be utilized (e.g., by applications that consume such data), search projects defining sets of data it may be desired to search, or other types of semantic data. For example, as will be discussed in more detail, embodiments of a data management system may present the ability to develop or specify use cases for applications or data according to the concepts of the semantic model (e.g., using a software development kit or the like). These defined use cases may thus form part of the semantic knowledge that may be utilized in the semantic layer of the data management system.

This semantic layer may be utilized to ingest data from heterogeneous data sources and associate that data with the semantic model so it may be consumed (e.g., provided, processed, searched, or otherwise utilized) according to that semantic model, and in particular according to the concepts of the semantic tier of that semantic model. Thus, data sets may be generated based on those concepts where those data sets are only loosely coupled to the original data sources from which that data was obtained. More specifically, the semantic layer may allow data to be ingested by the data management system, contextualized according to the semantic model, and utilized by systems or applications associated with data management system according to the concepts of the semantic model, without either structuring, or fully indexing, all the incoming data from the data sources.

Instead, embodiments may receive and store data from various data sources in a raw format (e.g., the format in which it is originally received or obtained from a data source) in a raw data store (e.g., also referred to as raw data lake). The semantic layer may enable the dynamic ingest of this stored raw data from the data sources according to when such data is needed, where the need for that data may be defined in terms of the concepts of the (e.g., semantic tier) of the semantic layer (or other defined in other terms). For example, the stored raw data may be indexed for searching only when it is needed (e.g., based on search projects that define data to be searched), or in a predictive manner based on a prediction (e.g., using a predictive model) of when such data may be needed in the near future (e.g., for searching) Additionally, or alternatively, this raw data may be processed to structure that data only as needed based on actual use cases defined for that data (e.g., in accordance with actual applications that may utilize this data), where those use cases may be defined based on the concepts defined in the (e.g., semantic tier of the semantic model).

To enable the dynamic ingest of data from these data sources therefore, in certain embodiments the semantic layer of the data management system may be utilized to create dynamic ingest pipelines for each data source. To illustrate, when the data management system is configured to receive and manage data from a new data source, a user may provide data source definition data to the data management system (e.g., through a data source provisioning interface). This data source definition data may include a definition of the data source such as a specification of a device comprising the data source (e.g., a manufacturer of a device, software installed on the device, application and version, etc.). The data source definition data may also include contextual data such as identifiers or a natural language description of the type of a device, service or application comprising the data source, or how data from that data source may be utilized or formatted, or other data on the data source being provisioned the user may wish to provide. The user may also provide examples or actual samples of data from that data source. These examples may be in the same format or schema as the data that will be provided by the data source being configured to the data management system. In some cases, the data management system may allow a user to provide one or more semantic mappings between concepts of the semantic model and portions (e.g., fields) of the schema of the data source as part of the data source definition.

Using the data set definition for the data source an ingest pipeline may be generated for that data source and the data source may be mapped to a concept in the most specific tier of the semantic model representing the configuration (e.g., device, software, etc.) of that data source. The generated ingest pipeline comprises a (data management system internal) schema for storing or using data from that source and one or more extraction functions adapted to extract data from data received from that data source and, if needed, transform that data for storage according to the internal schema for storing or using that data. More specifically, the internal data schema may comprise a set of data items or fields (reference herein interchangeably as data items or fields without loss of generality).

An extraction function may be associated with each of those data items where that extraction function may be a function adapted to locate corresponding data associated with that data item according to data in the data schema or format as it is received from the data source. For example, the extraction function may specify a parsing or searching function specifying a field name, a particular column or row in a table, an index into a field of comma separated values, etc. The extraction function may also specify a transformation (e.g., translation, casting, conversion, etc.) that should take place to data extracted from data from the original data source according to the extraction function before that data is stored or used according to the corresponding data item of the internal schema. For example, it may specify that a number is to be transformed from a 32 bit integer to a 64 integer, etc.

Moreover, the data items of the (internal schema) of the ingest pipeline for a data source may be mapped to one or more concepts of the semantic model of the semantic layer, including concepts in the last tier of the semantic model comprising the most abstract concepts. In this manner, data items of the internal schema associated with a (ingest pipeline for a) data source are associated with one or more concepts normalizing the semantics of that data item of the (internal schema).

Thus, generally, embodiments of a data ingest pipeline define a mechanism for processing data received from a data source to obtain and store that extracted data according to an internal schema mapped to concepts defined in the semantic model of the semantic layer of the data management system. To described in more detail, a data ingest pipeline is adapted to extract data associated with each data item of an internal schema defined for that data source based on a corresponding extraction function for that data item, transform that extracted data if needed, and store that extracted data as a data item defined according to the (internal) schema defined for that data source, where that data item is mapped to one or more concepts of the semantic model of the semantic layer of the data management system.

According to embodiments, to generate such an ingest pipeline for a data source, the semantic layer of the data management system may be invoked in a two step process whereby in a first step a candidate schema and extraction functions are generated and validated in an iterative manner until a final schema is achieved, and in a second step that final schema is mapped to the semantic model of the semantic layer.

To elaborate on particular embodiments, in certain cases the first step may involve a non-deterministic step that utilizes the semantic layer to evaluate the data set definition for the data source to generate a candidate schema. Specifically, a candidate schema may be generated by providing the data set definition comprising the data source definition data (e.g., a specification of a device comprising the data source, contextual data for the data, examples or actual samples of data from that data source, etc.) and any other desired semantic knowledge associated with the data source (e.g., user provided data on the data source, use cases defining how data from that data source may be utilized, the semantic model itself, data gathered during operation of the data management system in other contexts pertaining to an enterprise's use of data etc.) to a predictive model (e.g., LLM) of the semantic layer of the data management system.

For instance, a prompt may be generated to an LLM of the semantic layer where that prompt includes or specifies the desired data source definition data and any other desired semantic knowledge and the prompt requests the LLM to generate a (candidate) schema for the data source along with extraction functions (including any transformations) for data items of the candidate schema produced. For example, a table schema comprising the data items that may be represented in SQL may be requested. Other types of schemas may also be utilized and are fully contemplated herein. In response, the LLM may return a candidate schema, including data items and data types for those data items along with extraction functions for those data items.

Once the candidate schema is obtained from the LLM, it can be validated. This validation may be a deterministic step in which the candidate schema, including the extraction functions, is tested by applying it against example or sample data from the associated data source (e.g., as provided by the user in a data set definition when initiating a provisioning of the data source for the data management system). In other words, the data extraction functions associated with the candidate schema may be applied against the example data from the data source to attempt to extract (e.g., and transform) data for the corresponding data items of the candidate schema and an attempt may be made to store the data extracted by the extraction function according to the candidate schema generated by the LLM.

The results of this validation step may be evaluated against one or more validation criteria to determine if the candidate data schema has passed the validation step. This validation criteria may be configurable and may be associated with whether data for each data item of the candidate schema can be extracted from every (or a set of) example data from the data source and if the extracted data is of a data type or format defined by the data item of the candidate schema. In some cases, if one or more data items cannot be extracted or was extracted in an improper form (e.g., not in a form or type defined by the data schema for that data item) from one or more data samples of the example data set for the data source, the candidate schema may fail the validation step. It will be noted that almost any validation criteria may be utilized with respect to evaluating a candidate data schema with respect to a set of sample data from a data source to which that candidate data schema applies, and all such validation methodologies are contemplated here.

If the candidate schema does not pass the validation step, another (e.g., subsequent) candidate schema for the data source may be generated using the LLM of the semantic layer. In some embodiments, error data obtained from the validation process of the (previous) candidate schema may be obtained (e.g., determined during the validation process) and provided to the LLM in a subsequent prompt requesting the LLM to generate another candidate schema (e.g., to adjust the previously generated candidate schema based on the error data). This error data may include data on the correct extraction function or semantic concept to apply to a data item. In other embodiments, error data could include which data items of a candidate schema failed validation and why, such as what extraction functions failed, what data was not transformed into a proper data type according to a corresponding data item, or other error data. The subsequent prompt generated for the LLM to generate another candidate schema may be part of an ongoing dialogue with the LLM in a context window or other interface of the LLM such that the LLM may maintain context during this (internal) candidate schema generation process. Alternatively, a new (e.g., context free) request may be submitted to the LLM where this new request may (or may not) identify the previous candidate schema for the data source and the error data associated with the validation of that candidate schema.

Once a newly generated candidate schema is generated by the LLM, deterministic validation can be attempted on this new candidate schema using the data samples of the example data set for the data source. This candidate schema generation and validation can be continued until the candidate schema is iteratively refined such that it passes the validation step. In one embodiment, once a candidate schema passed the validation it may be presented to a user for additional validation such that the user can confirm the candidate schema. If the user does not confirm the candidate schema the iterative process may be continued by, for example, obtaining user input regarding the candidate schema rejected by the user and providing this input to the LLM in a subsequent prompt to generate a new candidate schema.

Accordingly, once a candidate schema passes the validation process, that final schema may be mapped to the semantic model of the semantic layer of the data management system. Here, once again, a predictive model (e.g., an LLM) of the semantic layer may be utilized. This predictive model may be the same, or a different, predictive model than the predictive model utilized to generate candidate schemas (e.g., in the non-deterministic schema generation step). In certain embodiments, a prompt may be generated to an LLM of the semantic layer where that prompt includes the final schema that passed the validation step (e.g., the data items of the final schema and the associated extraction functions) and the semantic model of the semantic layer, where the prompt requests the LLM to map the data items of the final schema to the concepts of the semantic model, including the semantic tier of the semantic model. This prompt may also include any other desired semantic knowledge (e.g., user provided data on the data source, use cases defining how data from that data source may be utilized, data gathered during operation of the data management system in other contexts pertaining to an enterprise's use of data etc.).

Once the mapping of data items of the final schema to concepts of the semantic model of the semantic is obtained from the LLM, the ingest pipeline for the data source may be created and stored in association with the data source. In one embodiment, before creating the ingest pipeline that mappings returned by the LLM for the data schema may be presented to a user for additional validation such that the user can confirm the mappings. If the user does not confirm the mappings the mapping process may be performed again by for example, obtaining user input regarding the mappings and providing this input to the LLM in a subsequent prompt to generate new mappings. Once approved mappings are generated the ingest pipeline for the data source can then be generated.

The ingest pipeline for the data that is generated for the data is thus adapted to extract data associated with each data item of an internal schema defined for that data source based on a corresponding extraction function for that data item, transform that extracted data if needed, and store that extracted data as a data item defined according to the (internal) schema defined for that data source, where that data item of the schema for the data source is mapped to one or more concepts of the semantic model of the semantic layer of the data management system. In this way an ingest pipeline may be applied to data received from a corresponding data source to semantically contextualize such data by conforming (e.g., and storing) this data according to the internal schema determined for that data source. Moreover, there may be an ingest pipeline associated with each data source provisioned for the data management system, such that, when desired, the ingest pipeline for that particular data source may be invoked to process data originating from that data source

Embodiments of the semantic layer may thus be utilized in association with a data routing component to ensure that semantically contextualized data is provided to the appropriate systems and applications that consume such data before, or when, such semantically contextualized data may be needed. This data routing layer may be utilized to invoke the dynamic ingest pipelines (or portions thereof) associated with a data source on data from that data source when it is determined that such data is desired by a consumer of that data such as a system or application that is a part of the data management system or consumes data from the data management system.

Specifically, the ingest pipelines for data sources may be used to provide (semantically contextualized) data from one or more data sources configured at the data management system to one or more other systems or applications (e.g., only) as that data is needed (or in anticipation of the need for such data) by those systems or applications. One such system or application is an advanced search system. To allow data from data sources to be searched in this advanced search system, this data from those data sources may be indexed. However, instead of needlessly consuming processing resources and time to index all data that is received from data sources as is done in typical search system, embodiments of the data management system presented herein may only index data from those data sources when it is (or is anticipated to be) needed by a user (e.g., human or automated user).

In particular, embodiments of such an advanced search system may allow users to define sets of data based on the semantic model of the semantic layer of the data management system (or other criteria) and to query data received from the data sources according to the concepts defined in the semantic model (or other criteria). For example, the user may define a search project comprising a set of (search project) criteria for definition of a data set. This search project criteria can include the specification of any individual data sources, type of data sources or higher level abstractions as included in any tier of the semantic model (e.g., including the most abstract tier), or other criteria by which data or data sources can be defined. The search project criteria may also include a time period. This time period can be defined in almost any manner desired, including by giving bounding times (times, dates, days of the week, months, etc.), a looking backward period (e.g., two week previous, or two weeks previous from a given date), a defined time period (February, the first week in January) or in some other manner.

A set of data sources associated with the defined search project can thus be determined based on the search project criteria. For example, for any concepts of the semantic model specified in the search project criteria, the semantic model may be traversed (e.g., in a reverse direction to determine nodes in each previous tier of the semantic model) to determine the data sources associated with that search project criteria. Data for that search project can then be obtained from the raw data lake in which data from data sources is stored as it was received (e.g., according to the original format or schema in which it was received). Specifically, the raw data lake may be accessed to obtain data associated with the data sources determined for that search project for the time period specified in the search project.

The raw data associated with the search project may then be indexed and stored in the advanced search system for use (e.g., searching). Here, indexing the raw data for the search project may comprise storing the data obtained from each data source associated with the search project according to the internal schema determined for that respective data source. Specifically for a data source from which raw data associated with the search project was obtained, the advanced search system can determine the ingest pipeline associated with that data source. The ingest pipeline associated with that data source can be used to process the raw data from that data source associated with the search project to represent the data from that data source in the internal schema determined for that data source. The data for that data source as represented in the internal schema for that data source can then be stored in a refined data store (also referred to as a refined data lake) in the advanced search system in association with the search project.

In this manner, data associated with a search project may be indexed by processing data defined by criteria of that search project according to the data ingest pipelines corresponding to the data sources from which that data originated. Moreover, because the data associated with the search projects is now represented in an internal data schema associated with the data sources from which the data originated, where the data items of those internal schemas are associated with the concepts of the semantic model of the semantic layer of the data management system, the data of that search project has now been semantically indexed.

The data associated with the search project in the refined data lake (e.g., as represented in the internal schema associated with those data sources) can then be searched or otherwise accessed or manipulated in the refined data lake by a user using a search interface. Such a search interface may, for example, be part of a platform for complex data integration, manipulation or visualization such as Databricks, Kibana, or Palantir. Additionally, because the data for the search project has been semantically indexed, the data can be searched, organized, refined or otherwise accessed or manipulated based on the concepts of the semantic model of the semantic layer employed by the data management system. For example, data associated with a search project may be formed, accessed, searched or otherwise manipulated according to views, whereby one or more virtual data structures (e.g., tables or the like) can include data from across data sources in a specified format or structure.

To increase the speed of data availability or reduce the processing required for the (semantic) indexing of data associated with a search project certain techniques may be employed by embodiments of the advanced search system. In one embodiment, for example, when indexing the raw data associated with the search project, this data may be indexed in chunks or slices to make indexed data associated with the project available for searching more rapidly. These chunks may be determined based on any number of chunking criteria, such that a set of chunks of the raw data may be determined and each chunk indexed (represented and stored according to the internal schema for a respective data source) using the ingest pipeline associated with the data sources for that raw data. In one embodiment, these chunks may be determined by timing criteria such that each represents a time slice (a second, minute, hour, etc., worth) of data across the data sources of the search project from which data is available. The chunking criteria, or the granularity of the chunking criteria (e.g., second vs. minute vs. hour), may be determined by the search project criteria or the type of content of raw data specified by that search project criteria. Thus, as the chunks of raw data are processed, the corresponding chunks of data are represented according to the internal schemas for the data sources that provided that data can be stored in association with the search project in the refined data lake and made available for search through the search interface. These chunks may be processed, for example, according to a time ordering such that most recent data is processed before less recent data.

Another approach that may be utilized by embodiments to improve the speed of data availability and reduce usage of computing resources is to determine if data associated with a search project is already available in the refined data lake before obtaining data from the raw data lake and processing that raw data according to the ingest pipeline. Accordingly, before obtaining data from the raw data lake in accordance with indexing data for a search project, it can be determined if data associated with the data sources associated with the search project is present in the refined data lake for any of the time period defined for the search project (e.g., in association with another search project). If such data is present, it may be associated with the search project in the refined data lake. To avoid even having to copy this data, this association may comprise a link, pointer, or other reference to this previously indexed data stored in association with the search project. As such, any raw data corresponding to this already available, previously indexed, data for the search project may not be obtained from the raw data lake when data for the search project is obtained from the raw lake, avoiding redundant indexing (e.g., processing or storage) associated with such already present indexed data in the refined data lake.

As the presence of indexed data in the refined lake (e.g., before a search project is defined) may significantly increase the speed at which data sets associated with a search in one embodiment, the search system may employ predictive indexing. This predictive indexing may be based on the patterns, timing, and type of data defined or searched by users of the data management system. According to some embodiments then, this predictive indexing may generate a prediction of one or more data sets that may be requested or accessed in the future. The data corresponding to these predicted data sets can then be indexed (e.g., processed according to the ingest pipelines to represent and store the data in the refined lake according to the internal schema of data source associated with that data set) such that refined data associated with those predicted data sets can be available if requested. Because this indexing is predictive, and no need for this data may have yet manifested, this actual processing of raw data according to the ingest pipelines to generate this predictive indexed data may be accomplished at times when computer resources are relatively available, unburdened, or less expensive, reducing the processing burden placed on the computing systems comprising the data management system.

In certain embodiments then, to predictively index data, a set of predictive projects may be determined using predictive techniques. This set of predictive projects may be determined based on the occurrence of some event or other trigger, at regularly scheduled intervals or otherwise initiated. These predictive projects may define data sets by a set of criteria and a time period. This criteria may include concepts defined by the semantic model of the semantic layer employed by the data management system. These predictive projects may also be ranked based on a weighting associated with a likelihood of being requested or needed in the future. One or more of these predictive projects may be selected based on the weighting, the raw data associated with the data sources defined by the selected predictive project obtained from the raw data lake, and the ingest pipeline associated with each of the data sources associated with the selected predictive project used to process the raw data from that data source to represent the data from that data source in the internal schema determined for that data source. The data for that data source as represented in the internal schema can then be stored in the refined data lake in the advanced search system in association with the predictive project. Accordingly, indexed data associated with the selected predictive projects may be available in the refined data lake if it is requested in the future.

In certain embodiments to determine the set of weighted predictive projects search data associated with the advanced search system may be kept. Specifically, as users interact with the data management system (e.g., through the interfaces of the search system to define search projects or to submit queries to search data of those search projects), the data management system may log or otherwise track this search data (e.g., search project criteria used to define the search projects or time periods associated with those search projects, queries submitted against those search projects, frequency of queries, time periods when queries were submitted or data sources usage, frequency of data source usage, or almost any other search data desired). This search data may be used to build, or as input to, a predictive model to determine the predictive projects and an associated weighting.

The predictive model employed by embodiments to determine predictive projects may include a cluster based model, a LLM or some combination of a cluster based model and LLM. For example, clustering may be performed on search data based on a number of dimensions associated with the search data, including the search projects requested, or queries submitted in association with those search projects. The dimensions may include, for example, data sets being defined in a search project (e.g., criteria, including semantic concepts used to define such search projects), a time frame associated with search projects (e.g., a time that defines the search project data being requested relative from the time the search project was requested), or when that search project was requested (e.g., beginning of the month, end of quarter, etc.). The results of this clustering may result in a set of clusters that define predictive projects based on a set of criteria (e.g., concepts of the semantic model or other criteria) and a time frame (e.g., defining a time period of associated data for the predictive project or a time frame on which predictive indexing should be triggered). Additionally, there may be a weighting associated with each of those predictive projects determined based on the size of the cluster associated with each predictive project.

As another example, an LLM may be utilized to generate a set of predictive projects (e.g., and associated weightings) by creating a prompt for the LLM requesting such a definition of such predictive projects (e.g., and their relative prioritization), where the prompt includes tracked search data, such as the criteria defining search projects or queries (e.g., including the semantic concepts or specified data sources associated with such projects or queries). This prompt may also include any sort of contextual or other data (e.g., including natural language data) provided by a user when interacting with the data management system (e.g., when defining data sources or their uses).

Thus, generated predictive projects may be selected for predictive indexing (e.g., based on a weighting associated with those predictive projects or based on other criteria). In one embodiment, predictive projects generated by one technique or model (e.g., clustering) may be combined with predictive projects generated by one or more other techniques or models (e.g., using an LLM) to determine a final weighted set of predictive projects from which to select the one or more predictive projects for indexing. The final set of predictive projects may be weighted according to a degree of overlap between the predictive projects generated by the two (or more) predictive models such that the more overlap there is between a predictive project as generated by one predictive model and a predictive project as generated by another predictive model the higher weight that predictive project (or criteria associated with that predictive project) is assigned. Additionally, in some embodiments the weighting associated with one predictive model (e.g., the cluster based model) may be given greater weight based on that predictive model's techniques (e.g., as cluster based models may be deemed more deterministic the predictive projects generated by the cluster based model may be given relative greater weights when determining a final set of predictive projects, etc.).

Once a set of final predictive projects is generated, one or more of these final predictive projects may be selected based on the weighting and (e.g., at the time specified by the predictive project), the raw data associated with the data sources defined by the selected predictive project obtained from the raw data lake and processed according to the ingest pipeline associated with each of the data sources to represent the data from that data source in the internal schema determined for that data source. The data for that predictive project as represented in the respective internal schemas can then be stored in the refined data lake in the advanced search system in association with that predictive project. As such, if data associated with that predictive project is requested (e.g., in association with a search project) that data may be available in the refined data lake and immediately available (e.g., for searching) in association with that search project

As can be seen then, the ingest pipelines for data sources may be used to provide semantically contextualized data from one or more data sources configured at the data management system to an advanced search system as, and when, needed (or in anticipation of such data being needed). These ingest pipelines may also be utilized to provide semantically contextualized data (e.g., data from data sources formed according to a corresponding internal schema) to other systems or applications.

As another example of such a system, embodiments of a data management system as disclosed may include a real time analytics system. This real time analytics system may provide data from data sources configured for the data management (or alerts or notifications based on such data) to applications or other consumers of data based on definitions of data used by those applications. As may be imagined, there may be many applications or other consumers that are continuously running or running at prescribed intervals (or other application) that it is desired to receive data as quickly as possible. Many of these applications or other consumers may be performing substantially real time analytics on such data. For example, applications relating to cybersecurity may desire to have data from data sources as soon as it becomes available to assess the security of a network, raise alerts and take remedial action as soon as is possible before, or after, a security violation is determined.

In most circumstances, designers or developers of these applications do not have an awareness (or do not have a full awareness) of the network topology of an enterprise, what data sources exist within that enterprise, or what data from those data sources is actually needed to perform desired analytics. There may, however, be a number of data sources distributed across an enterprise that have data germane to the purpose of the application (e.g., that it is desired for the application to analyze). Thus, it is difficult if not impossible for developers of such applications to develop applications to effectively utilize all such data.

Moreover, the same problems discussed above are presented with respect to these applications developed to use data from specific data sources. Namely, these applications are inextricably bound to only those data sources and the data schemas or formats employed by those data sources. This causes the applications to be extremely fragile, breaking whenever an underlying change to data sources takes place. Additionally, these applications lack portability. They cannot be deployed in association with other enterprises or data sources and must be manually altered to take into account any new, updated or removed data source.

As well, it is typically the case that data management systems operate unaware as to the uses of the data they are managing. Thus, they must account for almost any and all potential uses of such managed data by sorting, organizing, collating, etc. all data received across all data sources. As may be imagined this is woefully inefficient, consuming large amounts of time and computing resources. Additionally, the large amount of processing time and resources required for these tasks usually means that such data cannot be available for real time or dynamic usage.

Embodiments of the real time analytics system as discussed herein may ameliorate these problems, among others, by allowing use cases for data to be specified based on the semantics of the data desired for use by an application and allowing the defined use cases to drive the management (e.g., indexing, including processing or semantic contextualization) of data. For example, a software development kit (SDK) or other interface or tools may be provided by the data management system based on the semantic model of the semantic layer. Such a use case definition interface may allow a user to navigate or otherwise interact with the concepts (e.g., nodes) of the semantic model of the semantic layer of the data management system to define a use case based on a set (one or more) concepts of the semantic model. These use case criteria defining a use case can thus include concepts specified at any tier of the semantic model (e.g., including the most abstract tier), or other criteria by which data or data sources can be defined. In one embodiment, for example, a use case may be a standing query for data defined by one or more concepts of the semantic model of the semantic layer of the data management system.

In some embodiments, a use case may also comprise an evaluation, trigger, or action (collective evaluation) to be taken against data defined by that use case. This evaluation may define one or more conditions for which the data may be evaluated (e.g., if certain events occur more than a certain number of times) and a corresponding result (e.g., action) to be taken if those conditions are met (e.g., raise an alert).

A set of data sources associated with the defined use case can thus be determined based on the use case criteria. This determination may be accomplished by mapping the concepts of the semantic model specified by the use case to data sources. This mapping may occur, for example, when the use case is initially defined or subsequently when a mapping triggering event takes place. Such a mapping triggering event may comprise an alteration to the semantic model, the addition of a new data source or ingest pipeline or another type of event. In one embodiment, to accomplish this mapping for each concept of the semantic model specified in the use case criteria, the semantic model may be traversed (e.g., in a reverse direction to determine nodes in each previous tier of the semantic model) to determine the data sources associated with that concept. The data source can then be associated with that use case.

Additionally, because the internal data schema for each of those data sources determined for a use case is also known (e.g., as part of the ingest pipeline for that data source) wherein the data items of the internal schema are also mapped to corresponding concepts of the semantic model, the internal data schema for a data source may be evaluated to determine the data items of the internal schema for the data source that are associated with the use case in such a mapping process. These data items may thus be associated with the data source determined for that use case. Thus, for each use case defined according to concepts of the semantic model, not only may each data source associated with those concepts be determined but, additionally, the specific data items provided in data from that data source associated with those concepts may also be determined.

The real-time analytics system may thus receive raw data from those data sources as that raw data is received by the data management system. Specifically, a data ingest module of the data management system may be adapted for receiving raw data from the data sources (e.g., deployed across an enterprise) and storing the received raw data in the raw data store in association with the data source. This data ingest module may provide a subscription service whereby subscribers can subscribe to feeds from data sources (or types of data sources, etc.). Accordingly, when a use case is mapped to a set of data sources by the real time analytics system, the real time analytics system may subscribe to those data sources through the subscription service of the data ingest module. Consequently, when data is received from those data sources by the data ingest module it is stored in the raw data lake of the data management system and also provided to the real time analytics system through the subscription service.

When the real time analytics system receives this raw data from a data source (e.g., as it is received by the data management system), a sparse field extractor of the data analytics system may determine the use cases associated with that data source. For each of the determined use cases, it can be determined for that data source, the set of data items that should be extracted from the raw data and indexed for that use case (e.g., the set of data items associated with that data source for that use case). Based on these determined set of sparse data items (e.g., the subset of data items of the internal schema for that data source that should be extracted for the use case) the ingest pipeline for that data source may be utilized to extract that (sparse) set of data items from the incoming raw data. In particular, only the portions of the ingest pipeline (e.g., extraction functions) associated with those (sparse) data items may be executed in order to index (e.g., semantically contextualize and store) those data items according to the internal schema defined for those data items. Those data items may be stored in association with the data source or use case in the real time analytics data store at the real time analytics system where it is available for access by any application that wishes to consume such data. An execution engine of the real time analytics system may thus be adapted to execute queries from applications of other consumers and execute them against the data currently in the real time analytics data store. Applications can thus be adapted to access and use the data of these use cases through the execution engine by searching (e.g., based on the semantics associated with those use cases).

As can be seen then, instead of processing all data from all data sources, to make such data available for use by applications, the use cases for such data may drive the indexing (e.g., processing and semantic contextualization) of such data. By allowing these use cases to drive this indexing of data from the data source the actual amount of processing (and storage) required to index data may be significantly reduced, as only the actual data to be utilized may be determined and only this data indexed. Accordingly, by reducing the processing requirements and time required to index data for such use cases, this data may also be made available for use in real time or dynamically as it is received, allowing applications (e.g., analytics applications or cybersecurity applications, etc.) to implement real-time or near real time dynamic processing and actions on such data.

As discussed above, certain use cases may also include an evaluation to be performed on data associated with the use case, where that evaluation may be defined by a set of evaluation criteria that may be utilized to query or otherwise process the data associated with the use case to determine if certain criteria have been met (e.g., the processing of the data had certain results). Additionally, the evaluation may include an action such as raising an alarm or the like. Accordingly, the execution engine of the real time analytics system may execute the evaluation of use cases including such an evaluation to determine if the conditions have been met, and take the corresponding actions associated with those evaluations if so.

To speed the performance of those evaluations against data associated with a use case and to aid in performing evaluations that have to do with "windowing" criteria (e.g., how many events occurred within some previous time period) the execution engine may maintain a sparse data cache to store data processed by the sparse field extractor in some previous time period (e.g., one hour, 24 hours, etc.). In one embodiment, therefore, all data items indexed by the sparse field extractor of the real time analytics system may also be provided to the execution engine where they are stored in the sparse data cache for some period associated with the cache. The evaluations of the use cases may thus be carried out against the data in this sparse data cache or against the data stored in the real time analytics data store.

In certain cases, the action associated with an evaluation may be to send (or otherwise provide) a notification (e.g., an alert). Such notifications may be provided by the execution engine using a notification system which may be a subscriber based notification system or the like such that applications that wish to receive such notifications can subscribe to such notifications (e.g., use cases) through this notification system.

As can be seen, embodiments may offer a significant number of advantages. Specifically, embodiments may only process data from data sources when it is needed and may only process e data that may be desired or utilized. To accomplish such efficient processing, embodiments may generate performant and effective data ingest pipelines only for data sources that are added to the systems. These data ingest pipelines, or portions thereof, may only be invoked when needed where that need is defined by the actual data that may be used, thus reducing the computing resources required to process data from data sources while also reducing the amount of time required to do so.

In particular, data from data sources may be received and stored in its raw format in a simple inexpensive data storage mechanism, while data ingest pipelines can be used to process that raw data only when such data is designated for use. As such, a significant reduction in the amount of processing and storage resources required for indexing such data (e.g., semantically contextualizing such data) may be obtained. Moreover, the time needed to make such indexed data available for use can be significantly reduced, enabling the real time or dynamic use of such indexed (semantically contextualized) data.

Moreover, as a semantic layer may undergird embodiments of the data management system, the use of semantic concepts throughout embodiments of data management systems as disclosed may provide considerable advantages. For example, indexing of data is not based on particular data sources but instead is based on the semantic concepts indicating data to be indexed. As such, if there are in any changes in the network topology of an enterprise or the data sources being managed, these changes are easily dealt with as any new data from any new data source or any altered data from any altered date source may automatically be (or not be) indexed (including predictively indexed) based on the semantics of that changed data or data source.

As another advantage of employing such a semantic layer is that use cases for the data and applications that utilize such data can be created against abstracted layers of semantic model these use cases defining data to be used and applications that use that data can be written in an abstract manner way that is divorced from, and agnostic to, the data sources that provide such data, the formats, schemas, etc. in which that data is produced from the data sources regardless of changes in the data feeds being ingested. Such abstraction makes it simple to account for altered or new data sources and increases the portability or such applications as these use cases and applications are defined based on semantic meanings not data sources.

As another advantage, as applications are defined based on a semantic model, and can be mapped to that semantic model, audit trails for data being used by those applications can be easily created, as data associated with those concepts can be determined quite simply. The ease of creation of such audit trails can greatly assist in regulatory compliance such as with Europe's General Data Protection Regulation (GDPR) or the like). This capability also allows the value of various data and various data sources to be easily established by providing insight into what data from what data sources is actually consumed, utilized or searched. Other advantages may be realized and are fully contemplated herein.

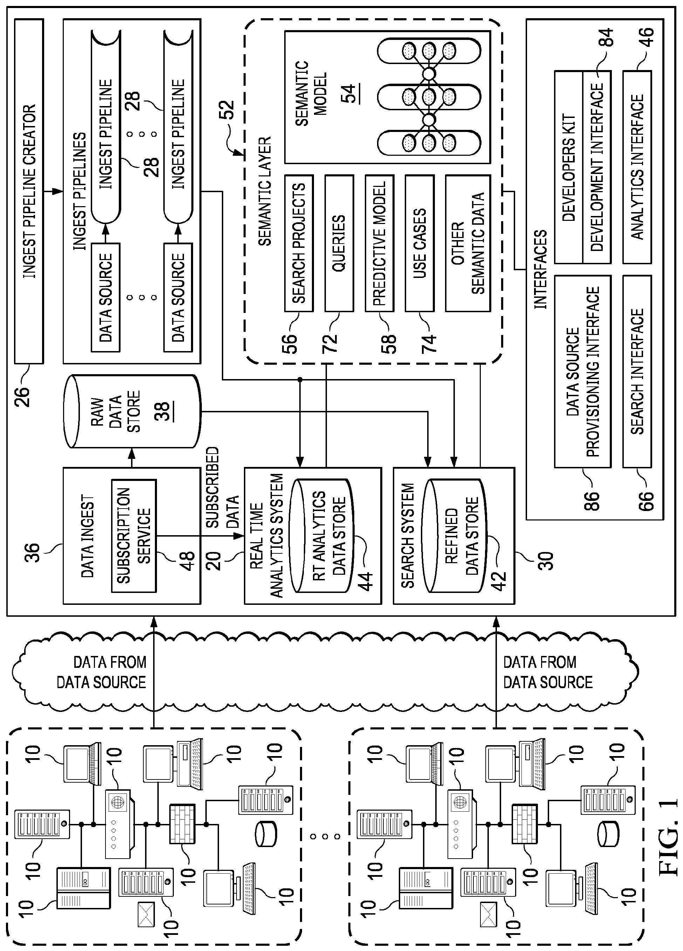

Looking first at FIGURE 1 then, one embodiment of a network topology including an embodiment of a data management system 50 is depicted. Data management system 50 may be adapted to manage data associated with one or more enterprises (e.g., any for profit or non-profit entity that employs computing resources or infrastructure). An enterprise may comprise a set of heterogeneous data sources 10 that may be distributed across the enterprise (e.g., at various sites, domains or locations associated with the enterprise). These data sources 10 may comprise any source of data that can be identified with a point of origin such as network infrastructure devices, network management systems, software services, applications, logs, etc.

To manage data originating from these data sources, data management system 50 may employ semantic layer 52. Semantic layer 52 may include a semantic model 54, search projects 56 defined by a user (e.g., using search interface 66), queries submitted by a user or application 72, use cases 74 (e.g., defined by a user through a development interface 84 using a developers kit or the like), a predictive model 58 such as a (semantic) LLM or other semantic data. Data management system 50 may utilize semantic layer 52 to illuminate data from data sources 10 with a semantic context based on semantic model 54 and route this contextualized data to various systems or applications that make use of that data such as real time analytics system 20 or search system 30.

The semantic model 54 may thus include a set of concepts organized as a set of (ordered) tiers, each tier comprising a set of (semantic) concepts, where the concepts in one tier are mapped to the concepts in a subsequent tier. The tiers comprising the semantic model may be ordered based on the level of abstraction represented by each tier (e.g., from more specific to more general or abstract) such that the first tier of the semantic model may represent more specific concepts for data normalization while the last tier of the semantic model may comprise the most general or abstract concepts for semantic normalization of data. The concepts included in each tier of the semantic model may be mapped (e.g., associated with) one or more concepts in a subsequent (e.g., more abstract) tier in the semantic model. As may be imagined there may be almost any number of intervening tiers between a first tier and a (most abstract) semantic tier of a semantic model. Moreover, there may be additional layers of a semantic model, such as layers including representation of applications that may consume data or how data is to be presented.

In one embodiment, a semantic model may include a (e.g., least abstract) first tier comprising a raw data or data source tier including a number of concepts representing specific sources of data, (e.g., including the data schemas, fields, specific device configurations, models or versions of software, specific services or programs, etc. of those data sources), and a (more abstract) semantic tier comprising a number of concepts representing the normalization of the semantics of data, such as concepts representing a type of the data, or a type of data source from which data can originate.

When a data source 10 is provisioned at data management system (e.g., when the data management system 50 is configured to receive and manage data from this new data source 10) a user may provide data source definition data to the data management system 50 (e.g., through data source provisioning interface 86). The provisioned data source 10 can then be associated with a concept in semantic model 54 representing the specific type or configuration of that data source 10.

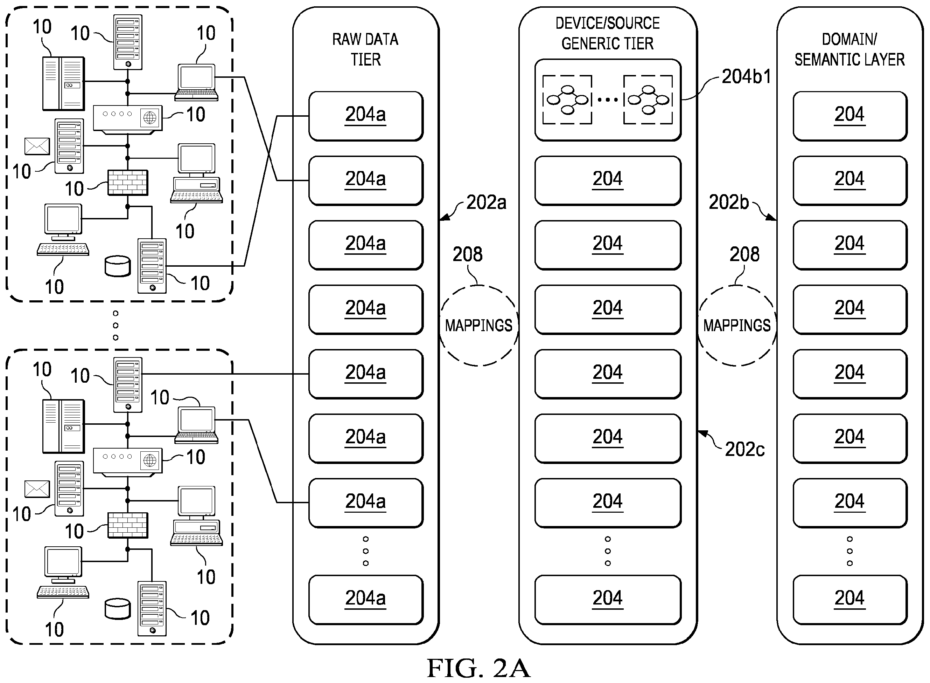

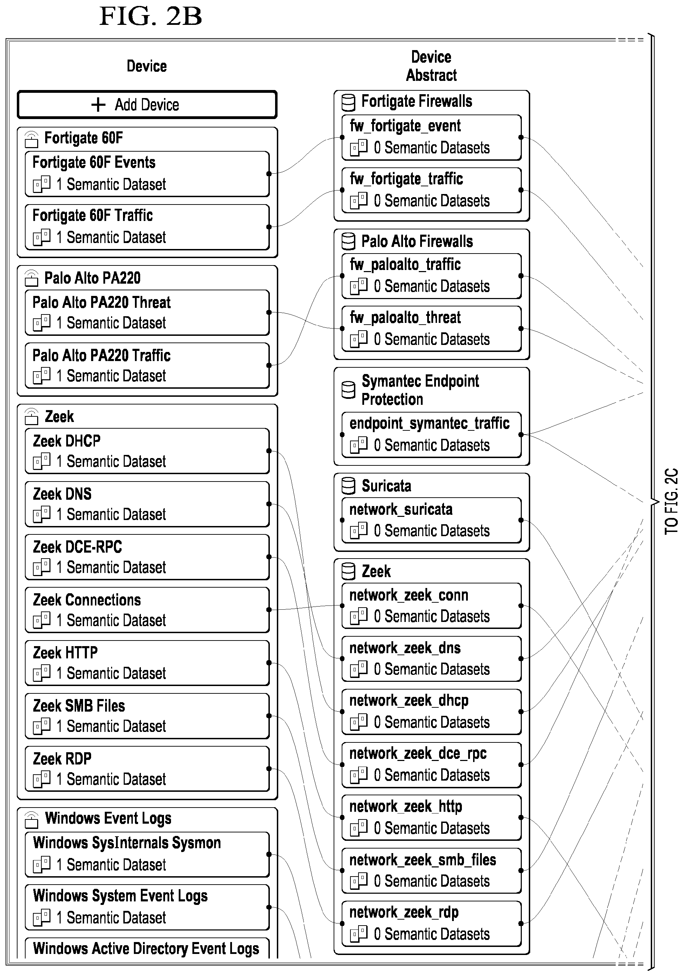

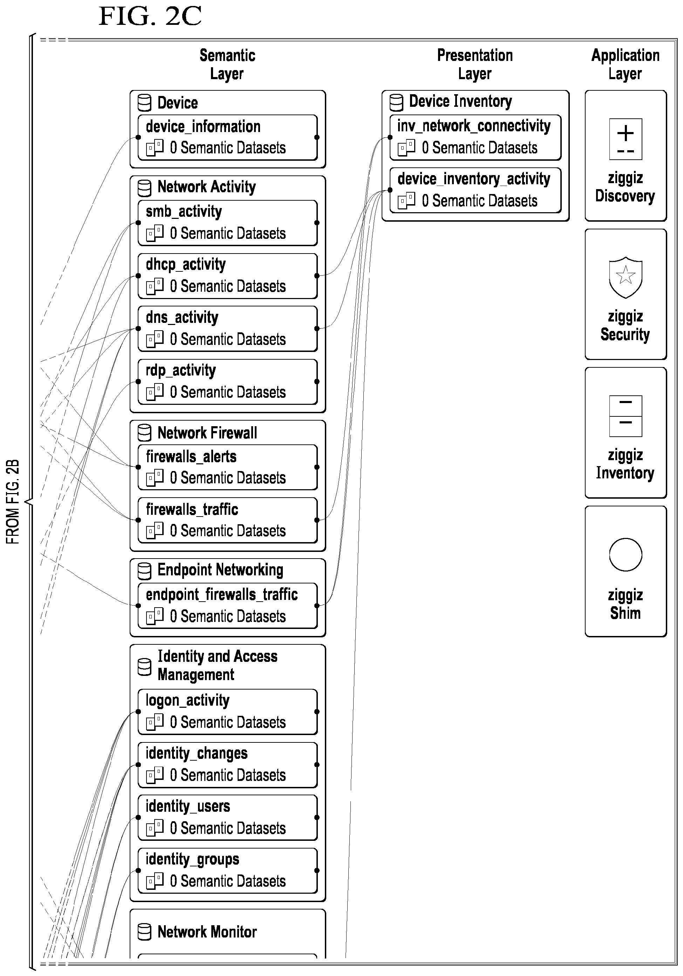

It may be useful here before proceeding further to discuss embodiments and examples of such semantic models in more detail. FIGURES 2A, 2B and 2C depict examples of such semantic models. Turning first to FIGURE 2A, a depiction of one example of a semantic model is presented. In this example, semantic model 200 include a (e.g., least abstract) first tier 202a comprising a raw data or data source tier including a number of concepts 204a representing specific sources of data, (e.g., including the data schemas, fields, specific device configurations, models or versions of software, specific services or programs, etc. of those data sources), and a (more abstract) semantic tier 202b comprising a number of concepts representing the normalization of the semantics of data, such as concepts representing a type of the data, or a type of data source from which data can originate. Concepts 204a associated with specific data sources can thus be defined in a least abstract layer and individual data sources 10 configured for a data management system associated with those concepts 204a in the least abstract tier 202a. In some embodiments, there may be one or more middle tiers 202c of the semantic model that represent varying levels of abstraction, such as a (source generic) tier representing generic data sources and including concepts that group data sources by criteria associated with those data sources including, for example, vendor criteria, manufacturer criteria, hardware criteria, software criteria (e.g., software type or version), criteria associated with a type of data provide, interface criteria, or other criteria. Additionally, each concept 204 (e.g., concept 204b1) may encompass one or more other concepts (or sets of concepts) such that each concept 204 may form a subgraph of the semantic model 200.

Mappings 208 may associate concepts across tiers 202 illustrating how data sources and data items from those data sources may interrelate through data lineage and transformations. By mapping data sources 10 to concepts (nodes) 204a in the least abstract layer in the first tier 202a, such a semantic model 200 may be traversed (e.g., in a reverse direction) starting with concepts 204 in the most abstract tier 202b to determine all data sources 10 associated with any semantic concepts in that most abstract tier 202b.

Accordingly, the semantic model 200 utilized by embodiments may be thought of, or represented as, a graph, where each tier 202 of the semantic model 200 comprises a set of nodes representing the concepts 204 associated with that tier 202 and the mappings 206 between the concepts of each tier 202 are represented by edges of the graph. In particular, the semantic model 200 used by embodiments may be thought of as a directed graph, where the set of nodes representing the concepts 204 in a more specific tier 202 are joined by directed edges to the one or more nodes representing concepts 204 in a subsequent more abstract tier 202 to which those nodes are mapped (e.g., a directed edge is included in the graph from a node in a less abstract tier to corresponding node in the more abstract tier to which the node of the less abstract tier is mapped).

In some embodiments a first least abstract tier of the semantic model 200 may include a device tier representing raw data feeds from specific device models and versions (e.g., Fortigate 60F v1.2.3) and abstract data sources, such as SaaS services. A middle tier may include a device abstract layer grouping data sources, such as devices, into product types by vendor or other criteria (e.g., Fortigate Firewalls). A most abstract semantic tier may include any concepts that serve to normalize data by semantics rather than vendor or source (e.g., Network Activity, Network Firewalls). Each tier may thus comprise nodes that represent data sources, datasets within those sources and individual fields (items) within those datasets. Edges in the graph represent mappings between concepts (e.g., data items or fields) across layers, representing how data sources interrelate through data lineage and transformations. FIGURES 2B and 2C are a depiction of such a semantic model.

Returning to FIGURE 1, data sources 10 are provisioned at data management system by providing data source definition data to the data management system 50 (e.g., through data source provisioning interface 86) and the provisioned data source 10 is associated with a concept in semantic model 54 representing the specific type or configuration of that data source 10. Additionally, ingest pipeline creator 26 may create an ingest pipeline 28 associated with that data source 10 being provisioned (e.g., an identifier for that data source 10). Specifically, ingest pipeline creator 26 may create an ingest pipeline 28 for the data source using semantic layer 52. The generated ingest pipeline 28 for the data source 18 comprises a (data management system internal) schema for storing or using data from that source 10 and one or more extraction functions adapted to extract data from data received from that data source and, if need, transform that data for storage according to the internal schema for storing or using that data. The internal data schema may comprise a set of data items mapped to concepts of the semantic model 54.

Thus, ingest pipelines 28 created for provisioned data sources 10 in an enterprise may be used to provide semantically contextualized data from those data sources 10 to components of the data management system 50 as that data is needed by those components. In one embodiment, these components may include a real time analytics system 20 and a search system 30. Specifically, real time analytics system 20 may allow use cases 74 defining data sets where these use cases for data may be specified based on the semantics of the data desired for use by an application (e.g., through development interface 84). The semantics may be specified according to concepts defined in semantic model 54. Similarly, search system 30 may allow search projects 56 to be defined (e.g., through search interface 66), where those search projects define data sets based on the semantics of the data desired to search. The semantics may be specified according to concepts defined in semantic model 54.

Based on the semantic concepts used to define the use cases 74 or search projects 56 a set of data sources 10 associated with the use case 74 or search project 56 may be determined. Those data sources 10 may, for example, comprise each or all of a set of heterogeneous data sources distributed across the enterprise that are all associated with the semantic concepts used to define the use case 74 or search project 56.

As data is received from these various data sources 10 configured at the data management system 50, this data may be received by data ingest module 36 and stored in the raw data lake 38 (e.g., in its original form). The data received may be stored in the raw data lake 38 in association with a time stamp (e.g., indicating when the data was generated, received, stored, etc.) such that data from individual data sources 10 may be obtained according to a time based query or the like. Based on the data sources associated with a search project 56, search system 30 may obtain data received from those data sources 10 from raw data lake 38 and process this data using ingest pipeline 28 corresponding to each data source 10 to process data from that corresponding data to index (e.g., semantically contextualize and store) the obtained data in refined data store 42. The data set comprising the indexed data in refined data store 42 corresponding to that search project 56 may be made available for querying (e.g., through search interface 66).

Real time analytics system 20 may operate by subscribing to data feeds associated with the data sources determined for a use case 74. Specifically, data ingest module 36 may provide a subscription service 48 whereby subscribers may subscribe to data feeds from data sources 10. Thus, as data is received from that data source 10 not only may data ingest module 36 store this data in raw data source 38 but, additionally, data ingest module 36 may provide this received raw data from the data source 10 to subscribers to the data feed for that data source. Thus, by subscribing to data feeds associated with data sources determined for a use case 74, real time analytics system 20 may receive the raw data received from that data source 10 (e.g., as it is received by the data management system. Real time analytics system 20 may process this received raw data from data sources associated with a use case 74 using ingest pipeline 28 corresponding to each data source 10 to process data from that corresponding data to index (e.g., semantically contextualize and store) the received data in analytics data store 44. The data set comprising the indexed data in analytics data store 44 corresponding to that use case may be made available for use by application or other consumers (e.g., querying) through analytics interface 46.

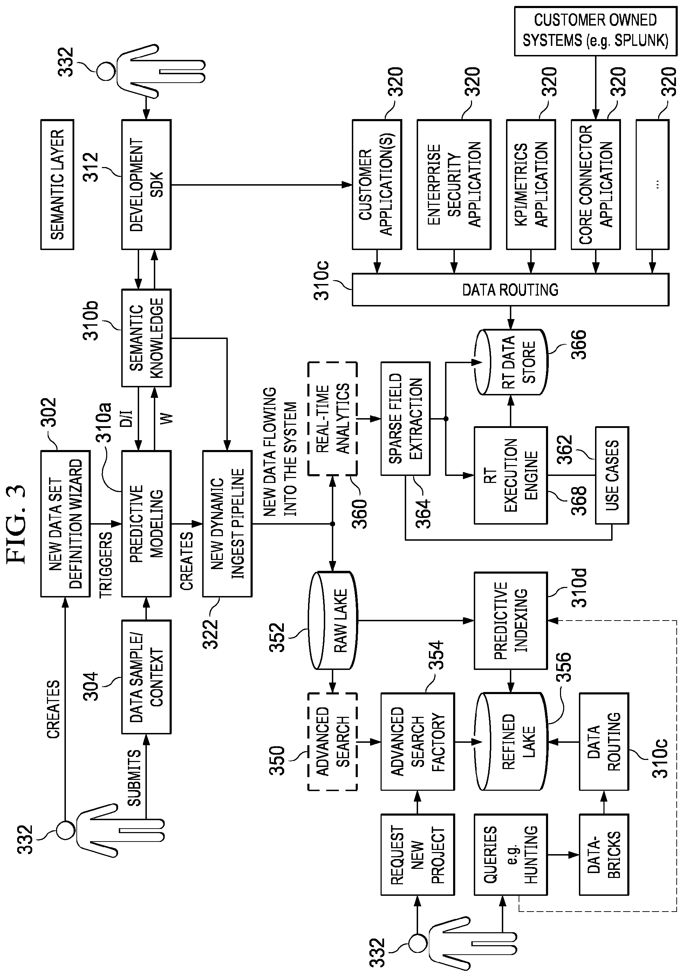

Turning then to FIGURE 3, a depiction of an architecture of a data management system according to an embodiment is presented. Here, a networked computer environment may include a data management system (or platform, used herein interchangeably) 300 that includes a number of computing devices or applications that may be coupled over a computer network or combination of computer networks, such as the Internet, an intranet, an intemet, a Wide Area Network (WAN), a Local Area Network (LAN), a cellular network, a wireless or wired network, or another type of network.

Data management system 300 utilizes a consistent semantic layer 310 with associated data structures and schemas to provide structured querying and indexing of data sets while providing automated real time analytics and data routing to provide application portability, increase system reliability, reduce deployment time, and decrease cost. This semantic layer 310 may utilize consistent semantic annotations determined through predictive modeling that may be used throughout the data management system 300 to ingest, analyze, filter, search, or otherwise interact with data sets in a consistent manner.

The semantic layer may also be employed to facilitate data routing in a real time or other dynamic setting to allow real time analytics to be performed in a manner that reduces the complexity required to develop applications that make use of data sets and associated semantics while simultaneously increasing both the portability and the resiliency of such applications. Accordingly, this predictive modeling may save time (and thus associated cost) when new data sets are ingested or otherwise processed. Moreover, the capabilities of the data management system 300 may allow for portable applications that can be created once and utilized in different contexts. Such a consistent semantic layer 310 may be provided by annotating data for data sets with semantic annotations or context from a semantic language model. This context can therefore be utilized through the data management system 300 to abstract the actual data sets and fields from the semantics of that data. The semantic annotations or context enable system 300 to interact with semantically similar data in the same or similar manner by semantically normalizing data or different data sets or from different data sources.

Initially, a user that wants to work with a data set from one or more data sources (e.g., data that may be provided once, continually, at regular intervals, etc. from a data source) will onboard that data set with the data management system. In particular a user 332 that wants to onboard new data can interact with a data definition wizard 302 (e.g., an interface) of the data management system 300 to define the data set.

This interaction may include the user 332 submitting an example data sample for the data set and an associated context 304. For example, a user that is defining a data set that is associated with an Application Programming Interface (API) can submit a JavaScript Object Notation (JSON) file that is obtained from or otherwise associated with that API. If the user wants to define a data set that is associated with a database, the user can provide connection details for that database such that the data management system 300 can pull data or a schema definition from the database. The data set definition may also include a corresponding context (also referred to as a contextual description). This data set context may be a human language description of the data set, what it includes, the type of this data, the format of the data, where the data is coming from or where the data originates, what the data set is going to be utilized for (e.g., what any applications that may utilize data from the data set may do with the data, etc.), or any other information that it is desired to provide regarding the data set being defined.

This data set input including the data examples and context are provided to the predictive modeling 310a of semantic layer 310 which interacts with the semantic knowledge implementation 310b portion of the semantic layer 310 of the data management system 300 to get a data set definition in return. This semantic knowledge 310b may comprise a semantic large (layer) language model (sllm used interchangeably here with the term LLM without loss of generality) that may generate predictions for the data set definition. The data set definition is a definition of fields that are to be used with the data set (e.g., names and data types of those fields, the importance of those fields, etc.). The data set definition may also include a semantic data context pack, which is a semantic description for the data set definition.

Specifically, in one embodiment, a semantic context pack may include a semantic (i.e., contextual) description of the entire data set may be provided by the semantic layer 310 (e.g., the sllm of the semantic layer) along with semantic (i.e., contextual) annotations (e.g., human understandable metadata) that may be applied to the individual data fields of the data set definition. These semantic annotations may include language that may be utilized by the semantic layer 310 or the data management system 300 across data sets. The semantic knowledge that gets generated for the data routing may include data on how to read data from the data source for the data set and figure out its proxy, how to put it into structured format for storage and also add additional contextual information around it. This avoids the necessity of revamping or reconfiguring storage and intake of data sets each time a data set is revamped and provides the ability to easily and quickly process data sets.

As a result, the data management system 300 may also define or utilize a software development kit (SDK) or other interface 312 (e.g., that corresponds to the particular data set definitions or across data set definitions for different data sets defined in the data management system) where the SDK includes semantic annotations(concepts) for fields of a data set (e.g., the data set definition). This SDK may be utilized in the development of applications 320 that may utilize data from (or otherwise interact with) the data management system 300 based on those semantic annotations.

To accomplish the generation of the data set definition (including the semantic context pack) the semantic layer 310b may split the sample data of the data set being defined into a set of relevant tokens, (e.g., a JSON file can be split based on identifiers in the JSON, XML data can be split or parsed to determine the set of nodes defined by the XML data, if the example data is in a database, the relevant tokens may include the columns of the database, etc.). The tokens can then be provided to the sllm to generate predictions for these tokens along with predictions for the entire data set.

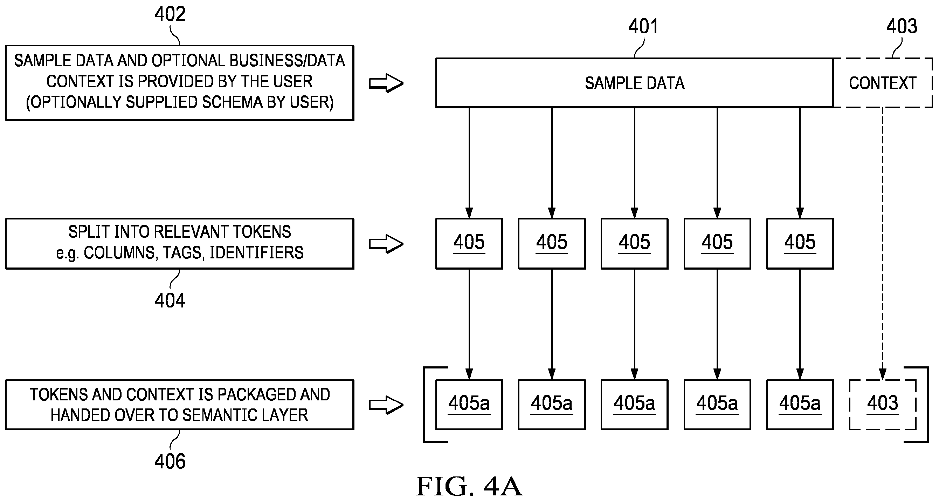

Moving briefly then to FIGURES 4A-4D, one embodiment for the operation of predictive modeling of a data set in association with semantic knowledge analysis is depicted. Initially referring to FIGURE 4A, as discussed previously, in the context of onboarding a data set with the Data management system 300 a user may provide sample data 401 and an associated context 403 (e.g., through a data set definition wizard provided by the Data management system or otherwise). The context 403 may include a usage view or an origin view of the data in, for example, a human understandable form. The user may also provide a schema for such data in certain embodiments (STEP 402).

It may be useful to illustrate an example. Suppose for example, the user wishes to utilize a data set based on AWS firewall logs (https://docs.aws.amazon.com/network-firewall/latest/developerguide/firewall-logging.html). The user can provide the following:

```
       Sample Data, a single AWS firewall log event:
       {
         "firewall_name": "test-firewall",
         "availability_zone": "us-east-1b",
         "event_timestamp": "1602627001",
         "event":
         {
            "timestamp": "2020-10-13T22:10:01.006481+0000",
            "flow_id": 1582438383425873,
            "event_type": "alert",
            "src_ip": "203.0.113.4",
            "src_port": 55555,
            "dest_ip": "192.0.2.16",
            "dest_port": 111,
            "proto": "TCP",
            "alert":
           {
              "action": "allowed",
              "signature_id": 5,
              "rev": 0,
              "signature": "test_tcp",
              "category": "",
              "severity": 1
       Context: This data set contains firewall log events from our AWS Network
       Firewall, securing our company's production environment. The firewalls occupy
       IP space X. This is no physical appliance but cloud deployment, so new virtual
       firewalls can come up or down quickly.
```

The sample data can be split into relevant tokens 405 (STEP 404). These can be packaged into an array including the tokens and context. These packaged tokens 405a along with the context 403 provided by the user (e.g., the array including the tokens and context) can then be provided to the semantic layer of the data management system for analysis (STEP 406). Continuing with the above example:

Here the sample data JSON can be split up as follows:

```
       [{name: "firewall_name", value: "test-firewall", "index": 0, ...}, {name:
                 "availability_zone", value: "us-east-1b", "index": 1, ...}, ..., $context]
```

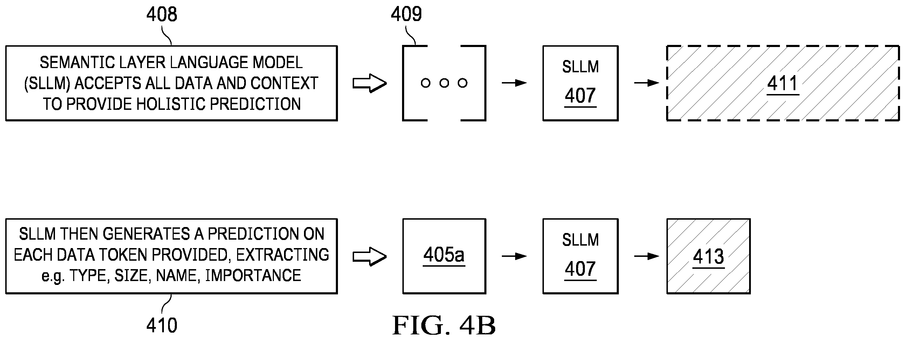

Moving then to FIGURE 4B, the semantic layer includes sllm 407. Sllm 407 may be a large language model trained for data engineering tasks and data usage tasks. The entire set of tokens and context 409 can then be provided to sllm 407 (STEP 408) which provides a holistic prediction 411 on the data context represented by the set of tokens and context 409. The prediction 411 may comprise a semantic (i.e., contextual) description of the entire data set. Again, continuing with the above example:
This dataset provides a snapshot of firewall activity within the company's AWS production environment, highlighting the monitoring and security measures in place to protect network traffic. Ongoing monitoring and analysis of such events are essential to ensure the security and integrity of the network infrastructure. The firewalls occupy IP space X.

Each of the individual tokens 405a may also be submitted to sllm 407 to generate a corresponding mechanical token definition 413 for that token 405a. This mechanical token definition 413 may include a field name, a data type and an importance ranking relative to the other tokens 405a the set of tokens 405a of the data set and a semantic annotation for the field that is based on the context included in the data set. For the above example:

```
       {"name": "firewall_name", "value": "test-firewall", "index": 0, ...} --> {"name":
       "firewall_name", "type": "string", "index": 0, "length": 64, "importance": 10, ...}
```

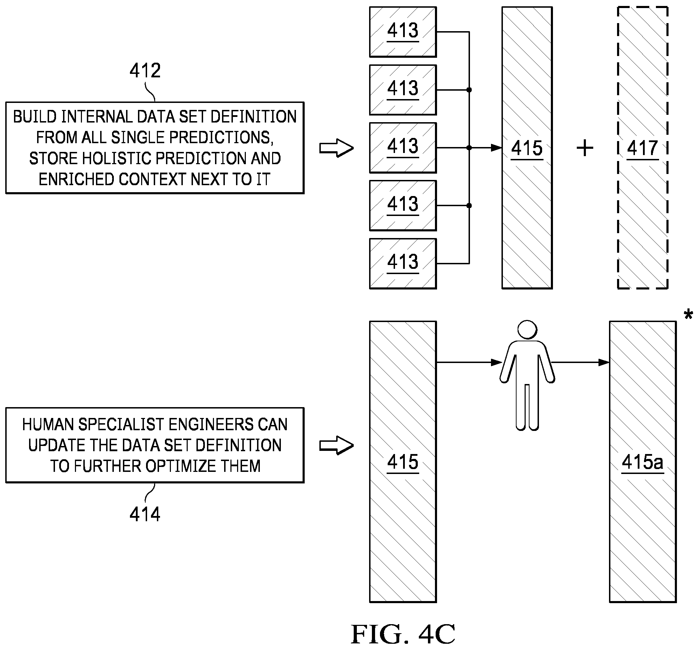

Referring now to FIGURE 4C, the mechanical token definitions 413 generated by sllm 407 can then be packaged together into a data set definition 415 (STEP 412). This data set definition 415 may include a set of definition statements for a representative data structure (e.g., a set of database tables or entries) for the fields of the data set along with the context 417 for that data set definition 415. This context 417 may include semantic (i.e., contextual) annotations that may be applied to the individual data fields of the data set definition. Thus, these semantic annotations may be associated with (or "riad along with" the defined fields of the data set and may be utilized throughout the Data management system to process (e.g., analyze, etc.) data of that data set.

So, for the above example, a SQL CREATE TABLE statement that can accept the original JSON of the example may be created:

```
          CREATE TABLE firewall_events (
             firewall_name VARCHAR(255),
             availability_zone VARCHAR(255),
             timestamp_unix BIGINT,
             event_timestamp TIMESTAMP,
             event_flow_id BIGINT,
```

This is then saved / created together with all above predictions and original customer provided context.

In some embodiments, the data set definition 415 may optionally be presented to the user that initiated the creation of the data set in the Data management system or another user for a review (STEP 414). These users may be specialist engineers that can update or edit the data set definition 415 to, for example, produce a more optimized or tailored data set definition 415a. In particular, the data management system 300 may provide an interface to interact with the semantic layer. This interface may allow a user to provide additional context around a data source or data set and this additional context may be added to the semantic layer or annotations for the data source and may also be used to retrain the sllm 407.

For example, for the above example data schema, a user can change:

```
          CREATE TABLE firewall_events (
             firewall_name VARCHAR(255),
             availability_zone VARCHAR(255),
             timestamp_unix BIGINT,
             event_timestamp TIMESTAMP,
             event_flow_id BIGINT,
          to
          CREATE TABLE firewall_events (
             firewall_name VARCHAR(255),
             availability_zone VARCHAR(40),
             timestamp_unix VARCHAR(10),
             event_timestamp TIMESTAMP,
             event_flow_id BIGINT,
```

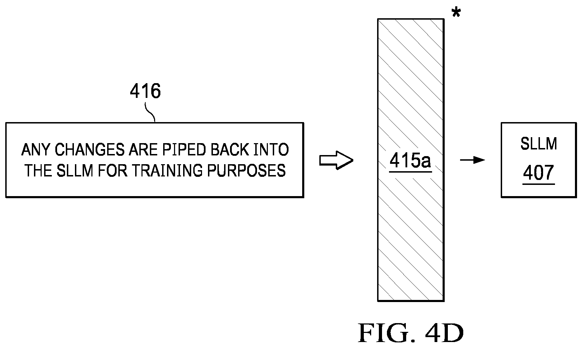

As depicted in FIGURE 4D, if such a user edits or make changes to the data set definition 415 generated by sllm 407, this updated data set definition 415a may then be utilized in the (re)training of sllm 407 (e.g., in a substantially continuous training cycle) (STEP 416). This retraining process allows context to be better taken into account by the Data management system and, more specifically, by the sllm 407 when creating data set definitions 415 in the future.

Returning now to FIGURE 3, by providing the data examples and context to the predictive modeling 310a of semantic layer 310, a data set definition and a semantic context (e.g., for the data set and individual fields) may be returned. This data set definition may also be used to generate a data set schema for that (e.g., corresponding to that) data set (e.g., data from one or more data sources associated with the data set) where that data set schema may be utilized to process new data from that data set and associate that ingested data from the data source with the corresponding context for that data (e.g., the semantic annotations for corresponding fields).

This data set definition (e.g., the data set schema) can be used to create a dynamic ingest pipeline 322 to process data from the specified data source for the data set. Usually data ingest is expensive because of the need to hold a large amount of computer resources. The dynamic ingest pipeline 322 can be automatically optimized or shifted between speed and expense (e.g., resource usage) based on the data set schema and definition, the context provided for the data set and any planned usage for the data that may be specified by the user. In particular, the dynamic ingest pipeline 322 may be modified or adapted based on the use cases registered with the real time analytics or usage data tracked with respect to the data in the real time analytics such that data that is more or less frequently utilized may be ingested, determined or otherwise obtained more or less frequently based on such use cases or usage data.

As such, new data associated with the defined data set may flow into the data management system 300 from one or more data sources associated with the data source. This data may be routed to two portions of the Data management system, an advanced search portion 350 and a real time analytics portion 360. In particular, the incoming data may be routed to be stored in raw data lake 352 of the data management system where data may be, for example, heavily compressed and unaltered (i.e., the incoming data may not be processed by the dynamic ingest pipeline 322 before it is stored in the raw data lake 352). This raw data lake 352 may utilize relatively inexpensive manners of storing data (e.g., using inexpensive cloud storage when possible).

The data can also (e.g., simultaneously) be processed by the real time analytics portion 360 of the data management system 300. Here, the dynamic ingest pipeline 322 defined by the data schema generated for the data set based on the semantic layer 310 may be utilized to process the incoming data. In this manner, each instance of the data from the data source is processed by the ingest pipeline 322 such the data from the data source is associated with the fields as defined by the data schema for the data set (e.g., and each of those data fields is associated with the corresponding semantic annotation as defined by the semantic layer 310). In real time analytics portion 360, as data instances flow in, sparse field extraction is being performed on those data instances before they are stored. This sparse field extraction may serve to extract the data fields of interest from each data instance (when available), while avoiding processing or storage of unneeded or unnecessary data from those data instances.

This sparse field extraction is driven by a set of configured use cases 362 in the data management system 300. These use cases 362 may define a set of data that needs to be extracted from data instances of a data set, such that when data instances arrive in association with that data set, the sparse field extractor 364 can determine use cases 362 associated with that data, data set or data source and extract the data fields defined by those use cases 362 (e.g., if they are available in the received data instances).

These use cases 362 may be defined using semantic annotations or other semantic definitions such that data (e.g., data fields) of data instances associated with those semantic annotations (e.g., in the data schema defined for that data set) may be extracted for data instances of that data set. Accordingly, these use cases 362 can be defined using semantic definitions for data as opposed to using field names that may be associated with the data in an original source of such data. Use cases 362 may be set up by users of the data management system 300. These use cases 362 may also be registered by applications 320 that interact with the Data management system 300. Those use cases 362 thus indicate to the sparse field extractor 364 which fields for data instances of a data set need to be extracted. The sparse field data instances (e.g., the fields for the data instance specified by the use cases) can then be stored in real time (analytics) data store 366.

These use cases 362 can thus also define searches that can be run over these data instances of the data set (e.g., from one or more data sources) by defining search values associated with the defined fields. The real time execution engine 368 can thus run the use cases 362 over the data stored in the real time data store 366 and store the results of these searches. In this manner, real time data store 366 may include significantly less data than either the raw data lake 352 or storing all fields data instances of a data set.

Applications that are registered with the data management system 300 can thus make use of the real time data in real time data store 366. These applications 320 can be provided by operators of the data management system 300 or may be third party (e.g., customer) applications 320 that can register their use cases with the data routing 310c portion of semantic layer 310 using semantic definitions of data fields as (e.g., corresponding to semantic annotations for data fields) defined in SDK 312 provided in association with data management system 300 (e.g., an inducing such semantic annotations or definitions for data fields). SDK 312 may encapsulate the semantic model employed by the data management system 300 by giving an agnostic or generic definition of data using semantic annotations that may be allied by the semantic model. In this manner, the data needed by applications 320 (or users) can be specified by such a generic semantic definition. These applications can include, for example, an enterprise security application, a KPI and metrics application, or other applications.

As will be apparent, it is desired to provide portability for such applications between third party developers, environments, data sources, etc. For example, if a third party is evaluating firewall data to detect problems based on the data format as produced by a firewall from a first manufacturer, this application could currently not be utilized by another party that utilizes a different type of firewall producing data of a different format (e.g., because the data fields, formats, etc. may be different between those firewalls and thus searches for particular data fields or data types may be not work across those different types of data.

The data management system 300 solves such a problem by allowing applications 320 to define their use cases 362 based on the semantic layer 310 provided by the Data management system 300. The semantic layer 310 may include many sublayers or a schema isolation or design patterns as described in the Appendix. These sublayers or patterns may be used to define such use cases 362 at different levels of granularity. In other words, the data fields defining a use case 362 for an application 320 may be defined using semantic layer 310 (e.g., definitions, context or other annotations defined through semantic layer 310), in lieu of, or in addition to, the names of specific data fields themselves. Importantly, by decoupling applications from specific schemas and formats for source data the portability and longevity of such applications 320 may be greatly increased.

Even more particularly, when an application 320 registers a use case 362 with the data management system 300, the use case 362 may specify the data needed for that use case 362 using JavaScript or JSON that specifies that data using semantic annotations or definitions that were provided based on the semantic layer 310 (e.g., the semantic model) of the data management system 300 itself. For example, the meta information of an application 320 that is registering with the data management system 300 may include a data dependency section that specifies its data dependencies using the semantic context or annotations for that data, where that semantic context or annotation may the same contextual language that is used by the semantic layer 310 (e.g., the sllm 407) of the data management system 300.

This use case 362 for the application can then get registered (or updated) with the real time execution engine 368 such that when sparse field extraction is performed by sparse field extractor 364, the data items (fields) of the data with those corresponding semantic annotations (e.g., corresponding to the semantic definitions provided in the use case 362) will get extracted from the incoming data instance. This data may then get sent through the data routing layer 310c which routes the data to the application 320 corresponding to the use case 362, or the extracted data may get compared against certain values specified by the use case 362 and sent to the application 320 if it meets the use case 362 registered for that application 320. In some embodiments, semantic layer 310 may serve to update use cases 362 for applications 320 based on the behavior of the application 320 that registered that use case 362 such that the use case 362 may get updated to include data fields (or semantic annotations or contexts) not originally included in the definition for that use case 362 as provided by the application 320 (e.g., such as when an application 320 continually asks for or utilizes such data fields).

As discussed, in addition to real time analytics portion 360, the data management system 300 may also include advanced search portion 350. Incoming data for a data set may get stored in raw data lake 352 as it arrives from the data source associated with the data set. Thus, the raw data lake 352 may store this data as it arrives at the data management system 300 (e.g., through raw data lake 352 may be heavily compressed and store the data in a manner or with other metadata that may allow the definition of a data set or data source from which the data was obtained).

Users may interact with data routing 310c functionality of the data management system 300 to obtain or use data of interest from the advanced search 350 functionality. In particular the user may interact with the advanced search (interface) 354 to define a new search project. The user can define a new search project according to, for example, the concepts expressed in the semantic model utilized by the data management system. Search projects or searches may be defined using a data analytics platform or interface such as Databricks or Palantir.

Once a new search project is defined, data corresponding to that search project may be determined from the raw data lake 352 (e.g., data from the one or more data sets corresponding to one or more time periods). The determined data from the raw data lake 352 can be contextualized (e.g., according to the data set definition and corresponding semantic annotations defined for that data set), put into the data set schema defined for that data sources, and indexed such that the data can be used (e.g., search by the user). The contextualization of the defined data of the search project may include passing the raw data as determined based on the search project through the dynamic ingest pipeline 322 at that point to obtain that data in a contextualized form according to the data set definition (e.g., schema and context) for that data. This data for the defined search project can then be stored in a refined data lake 356 and be made available for use by users.

It is likely the case that the specification and use of these user specified data sets may be relatively rare in relation to the use of the data on the real time analytics portion 360 of the data management system 300. However, it is still desired to improve the performance of the advanced search portion 350 and the corresponding indexing of data as much as possible. Thus, the advanced search portion 350 of the data management system 300 may employ predictive indexing 310d of semantic layer 310 to that end as will be discussed in more detail.

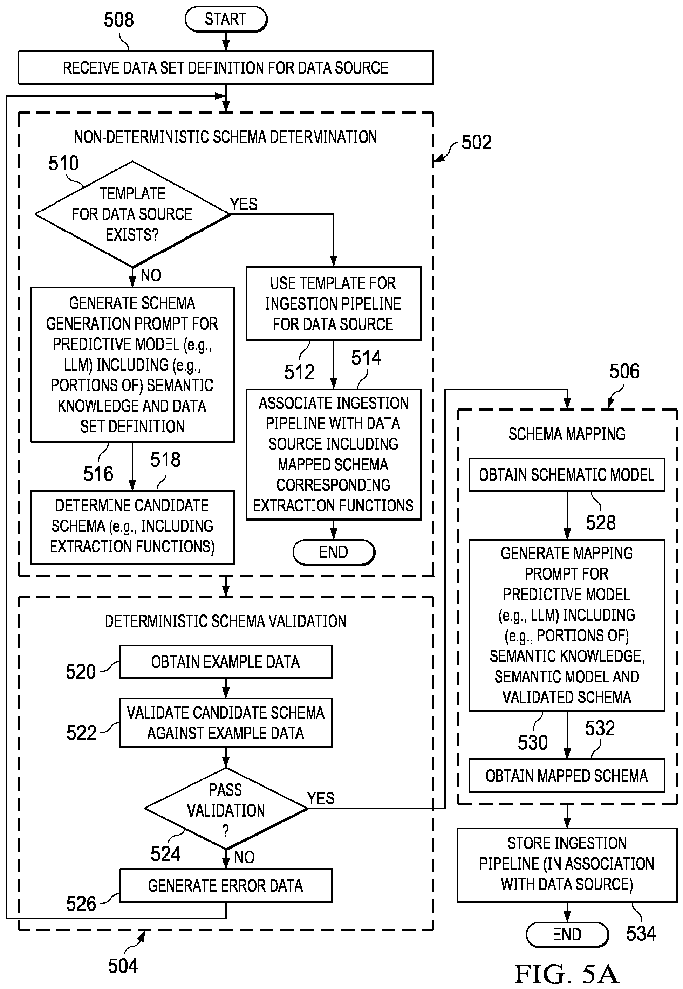

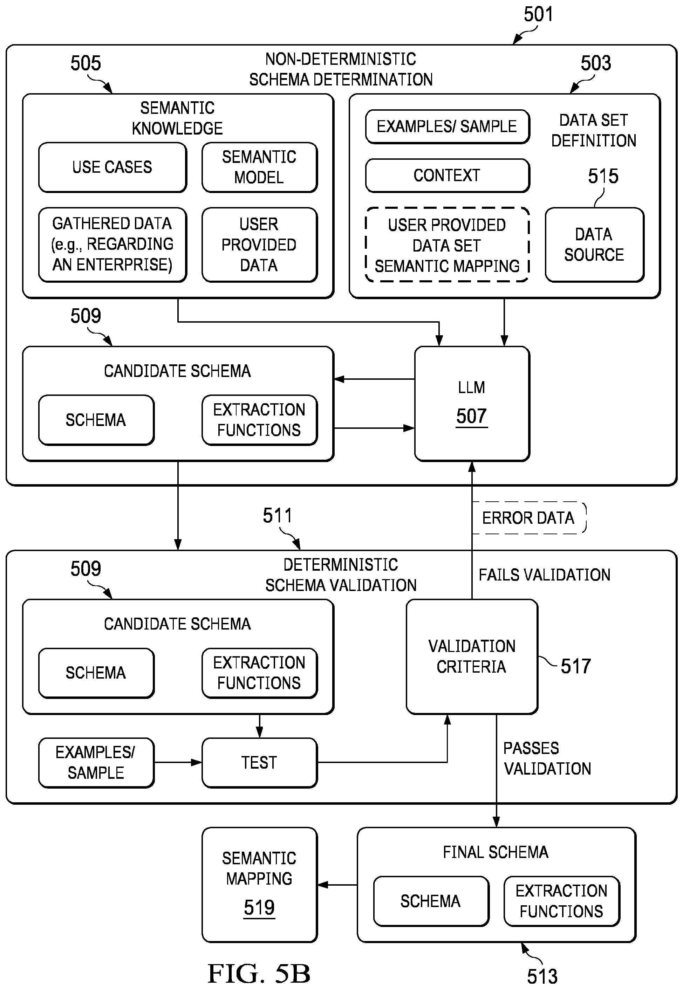

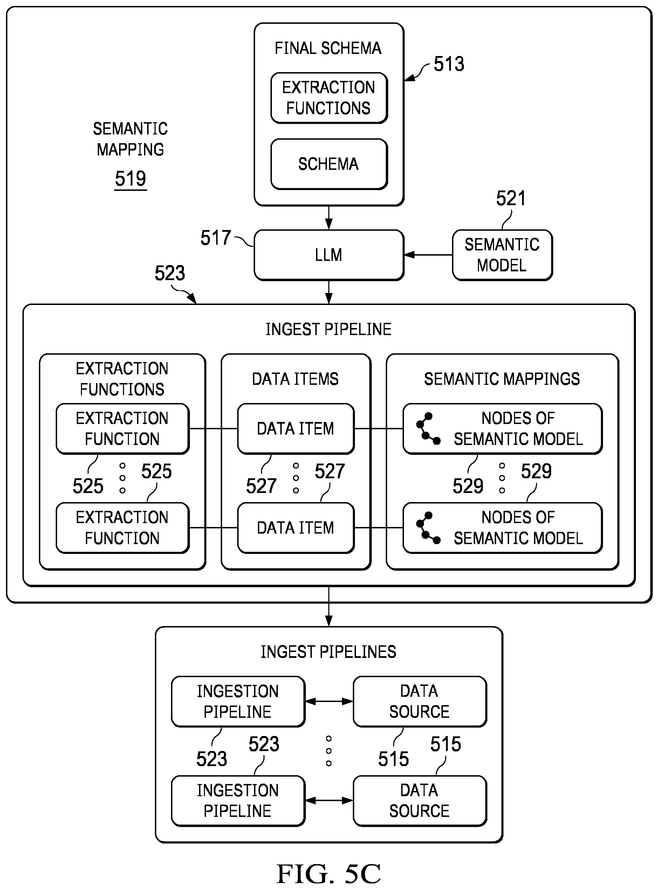

Moving now to FIGURES 5A, 5B and 5C embodiments of methods for creating ingest pipelines for data sources. Referring first to FIGURE 5A, in some embodiments, the semantic layer of a data management system may be invoked in a two step process whereby in a first step a candidate schema and extraction functions are generated in a non-deterministic manner (STEP 502) and validated in a deterministic manner (STEP 504) in an iterative loop until a final schema is achieved, and in a second step that final schema is mapped to the semantic model of the semantic layer (STEP 506).

Initially, a data set definition is received for a data source (STEP 508). This data set definition may comprise data source definition data. This data source definition data may include a definition of the data source such as a specification of a device comprising the data source (e.g., a manufacturer of a device, software installed on the device, application and version, etc.). The data source definition data may also include contextual data such as identifiers or a natural language description of the type of a device, service or application comprising the data source, or how data from that data source may be utilized or formatted, or other data on the data source being provisioned the user may wish to provide. The user may also provide examples or actual samples of data from that data source. These examples may be in the same format or schema as the data that will be provided by the data source being configured to the data management system. In some cases, the data management system may allow a user to provide one or more semantic mappings between concepts of the semantic model and portions (e.g., fields) of the schema of the data source as part of the data source definition.

It can then be determined if a template (e.g., a previously already created data ingest pipeline) exists for that data source (STEP 510). If a template exists for that data source (Y branch of STEP 510), that existing ingest pipeline may be used for that data source by mapping the data source to the semantic model and associating the existing ingest pipeline with that data source (STEPS 512, 514). If, however, no template exists for that data source (N branch of STEP 510) a non-deterministic schema generation may be performed using the semantic layer of the data management system. As discussed this semantic layer may comprise the semantic model along with other semantic data (also referred to herein as semantic knowledge) such as predictive models (e.g., LLMs), the use cases defining how or what data of a data source is to be utilized (e.g., by applications that consume such data), contextual descriptions, search projects defining sets of data it may be desired to search, or other types of semantic data.

Accordingly, a prompt may be generated to an LLM of the semantic layer to generate a candidate schema (STEP 516). This prompt may include or specify the desired data source definition data and any other desired semantic knowledge. The prompt may request the LLM to generate a (candidate) schema for the data source along with extraction functions (including any transformations) for data items of the candidate schema produced. For example, a table schema comprising the data items that may be represented in SQL may be requested. In response, the LLM may return a candidate schema, including data items (fields) and data types for those data items along with extraction functions for those data items (STEP 518).

Once a candidate schema is obtained from the non-deterministic schema determination process (STEP 502), that schema can be validated (STEP 504). This validation may be a deterministic step in which the candidate schema, including the extraction functions, is tested by applying it against example or sample data from the associated data source (e.g., as provided by the user in a data set definition when initiating a provisioning of the data source for the data management system). In other words, example data from the data source may be obtained (STEP 520). This example data may have been provided by a user in the data set definition. To validate the candidate schema against the example data (STEP 522) the data extraction functions associated with the candidate schema may be applied against the example data from the data source to attempt to extract (e.g., and transform) data for the corresponding data items of the candidate schema and an attempt may be made to store the data extracted by the extraction function according to the candidate schema generated by the LLM.

The results of this validation step may be evaluated against one or more validation criteria to determine if the candidate data schema has passed the validation step (STEP 524). This validation criteria may be configurable and may be associated with whether data for each data item of the candidate schema can be extracted from every (or a set of) example data from the data source and if the extracted data is of a data type or format defined by the data item of the candidate schema. In some cases, if one or more data items cannot be extracted or was extracted in an improper form (e.g., not in a form or type defined by the data schema for that data item) from one or more data samples of the example data set for the data source, the candidate schema may fail the validation step. It will be noted that almost any validation criteria may be utilized with respect to evaluating a candidate data schema with respect to a set of sample data from a data source to which that candidate data schema applies, and all such validation methodologies are contemplated here.

Thus, If the candidate schema does not pass the validation step (N branch of STEP 524), another (e.g., subsequent) candidate schema for the data source may be generated using the LLM of the semantic layer (STEP 502). In some embodiments, error data obtained from the validation process of the (previous) candidate schema may be obtained (STEP 526) and provided to the LLM in the subsequent prompt requesting the LLM to generate another candidate schema (e.g., to adjust the previously generated candidate schema based on the error data). This error data may include data on the correct extraction function or semantic concept to apply to a data item. In other embodiments, error data could include which data items of a candidate schema failed validation and why, such as what extraction functions failed, what data was not transformed into a proper data type according to a corresponding data item, or other error data. The subsequent prompt (IN STEP 502) generated for the LLM to generate another candidate schema may be part of an ongoing dialogue with the LLM in a context window or other interface of the LLM such that the LLM may maintain context during this candidate schema generation process. Alternatively, a new (e.g., context free) request may be submitted to the LLM where this new request may (or may not) identify the previous candidate schema for the data source and the error data associated with the validation of that candidate schema.

This candidate schema generation and validation (STEPS 502, 504) can be continued until the candidate schema is iteratively refined such that it passes the validation step (Y Branch of STEP 524). In one embodiment, once a candidate schema passed the validation it may be presented to a user for additional validation such that the user can confirm the candidate schema. If the user does not confirm the candidate schema the iterative process may be continued by, for example, obtaining user input regarding the candidate schema rejected by the user and providing this input to the LLM in a subsequent prompt to generate a new candidate schema.

Accordingly, once a candidate schema passes the validation process (Y branch of STEP 524), that final schema may be mapped to the semantic model of the semantic layer of the data management system (STEP 506). Here, once again, a predictive model (e.g., an LLM) of the semantic layer may be obtained and utilized (STEP 528). This predictive model may be the same, or a different, predictive model than the predictive model utilized to generate candidate schemas.

In certain embodiments, a (mapping) prompt may be generated to an LLM of the semantic layer where that prompt includes the final schema that passed the validation step (e.g., the data items of the final schema and the associated extraction functions) and the semantic model of the semantic layer, where the prompt requests the LLM to map the data items of the final schema to the concepts of the semantic model, including the semantic tier of the semantic model (STEP 530). This prompt may also include any other desired semantic knowledge (e.g., user provided data on the data source, use cases defining how data from that data source may be utilized, data gathered during operation of the data management system in other contexts pertaining to an enterprise's use of data etc.).

Once the mapping of data items of the final schema to concepts of the semantic model of the semantic is obtained from the LLM (STEP 532), the ingest pipeline for the data source may be created and stored in association with the data source (STEP 534). In one embodiment, before creating the ingest pipeline that mappings returned by the LLM for the data schema may be presented to a user for additional validation such that the user can confirm the mappings. If the user does not confirm the mappings the mapping process may be performed again by for example, obtaining user input regarding the mappings and providing this input to the LLM in a subsequent prompt to generate new mappings. Once approved mappings are generated the ingest pipeline for the data source can then be generated.

Looking briefly at FIGURE 5B embodiments of this iterative non-deterministic schema generation process 501 and deterministic schema validation process 511 are represented graphically. Here, the data set definition 503 for a data source 515 and the semantic knowledge 505 existing at the data management system may be provided (e.g., in a prompt) to LLM 507 where that prompt requests the generation of a candidate schema. In response, LLM 507 may generate the candidate schema 509 that includes a schema including a set of data items and a set of corresponding extraction functions for the data items of that schema.

An attempt to validate this candidate schema 509 may then be made in the deterministic schema validation process 511. Specifically, the extraction functions of the candidate schema 509 may be applied to examples or sample data from the data source 515 (e.g., as provided in the data set definition 503) and an attempt is made to store and evaluate the extracted data according to the data items defined in the schema. The results of this process can be tested against a set of validation criteria 517. If the candidate schema fails validation another (e.g., subsequent) candidate schema for the data source may be generated using the LLM of the semantic layer in another non-deterministic schema generation process 501. In this subsequent non-deterministic schema generation process 501 error data resulting from the deterministic schema validation process 511 (or other error data such as that provided by a user) may be utilized. Once a candidate schema 509 passes the validation criteria of the deterministic schema validation process 511, that final schema 513 may undergo a semantic mapping 519 to map to the semantic model of the semantic layer of the data management system to the data items of the schema.

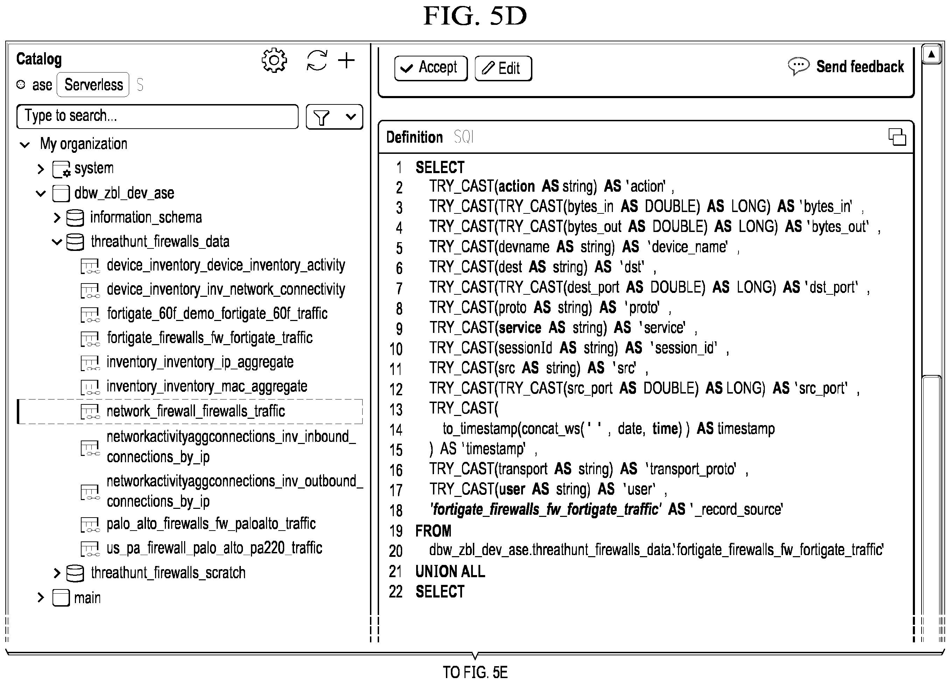

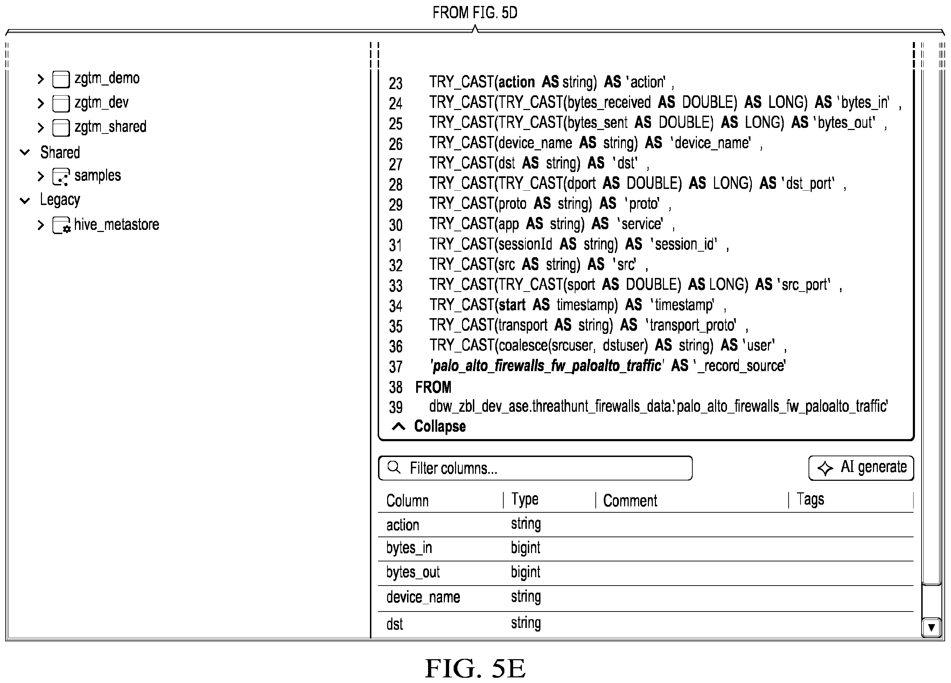

Moving now to FIGURE 5C, one embodiment of the semantic mapping process is graphically depicted. As will be recalled, final schema 513 may correspond to a data source 515 and include a schema 541 for storing data received from that data source 515 and a set of extraction functions 543 corresponding to the data items defined by that schema 541. These extraction functions may define how to extract (or otherwise obtain) and store data for a data item defined in schema 541 from data received (in its original format or schema) from the data source 515 corresponding to final schema 513. FIGURES 5D and 5E depict an example of such extraction functions.

As shown in FIGURE 5C, in semantic mapping process 519, the final schema 513 and the semantic model 521 may be provided to the LLM 517 in a prompt requesting the mapping of the data items (fields) of the final schema 513 to the concepts (e.g., nodes) of the semantic model 521. The resulting mappings of nodes of semantic model 529 to data items 527, along with the extraction function 525 associated with data items 527 defined in the schema 513 may comprise an ingestion pipeline 525 for the corresponding data source 515. This ingestion pipeline 525 is thus adapted to extract data associated with each data item 527 of the schema 513 defined for that data source 515 based on a corresponding extraction function 525 for that data item 527, transform that extracted data if needed, and store that extracted data as data items 527 defined according to the (internal) schema 513 defined for that data source 515. Each of those data items 527 of the schema for the data source 515 is mapped to one or more concepts of the semantic model 521 of the data management system.

In this way an ingest pipeline 525 may be applied to data received from that corresponding data source 515 to semantically contextualize such data by conforming (e.g., and storing) this data according to the final schema 513 determined for that data source 515. This ingestion pipeline 525 for the data source 515 may thus be stored in association with that corresponding data source 515. Thus, the data management system may comprise a set of ingest pipelines, where each ingest pipeline may be associated with one or more of the data sources configured for the data management system, such that, when desired, the ingest pipeline associated with a particular data source may be invoked to process data originating from that data source and store semantically contextualized data from that data source according to the schema 513 determined for that data source.

The ingest pipelines defined for data sources in a data management system may thus be utilized in association with a data routing component of the data management system to ensure that semantically contextualized data is provided to the appropriate systems and applications of the data management system that consume such data before, or when, such semantically contextualized data may be needed. In particular, this data routing layer may be utilized to invoke an ingest pipeline (or portions thereof) associated with a data source on data from that data source when it is determined that such data is desired by a consumer of that data, such as a system or application that is a part of the data management system or consumes data from the data management system.

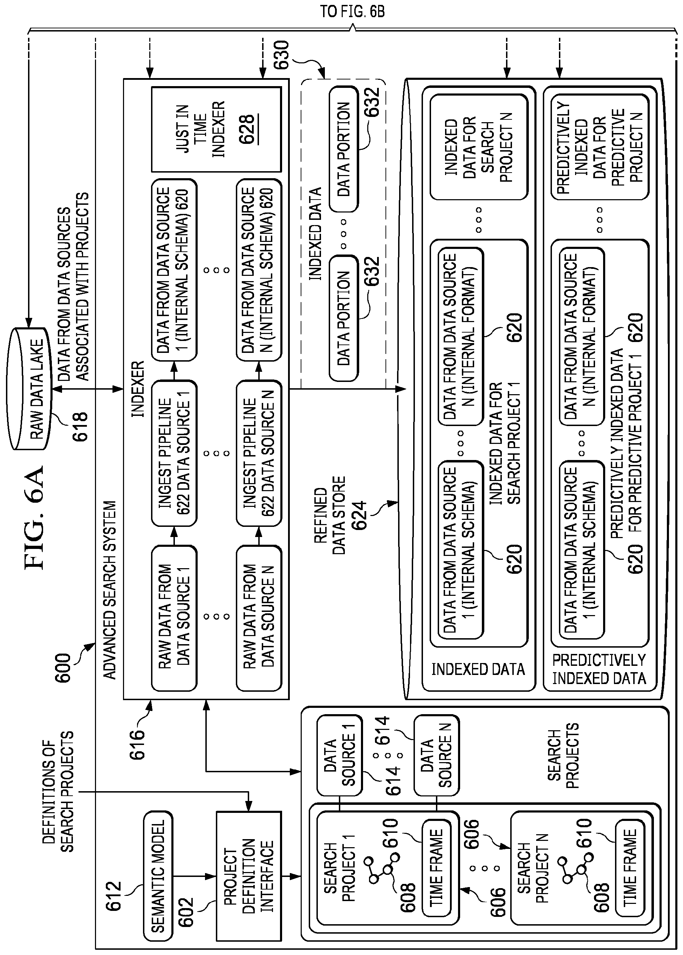

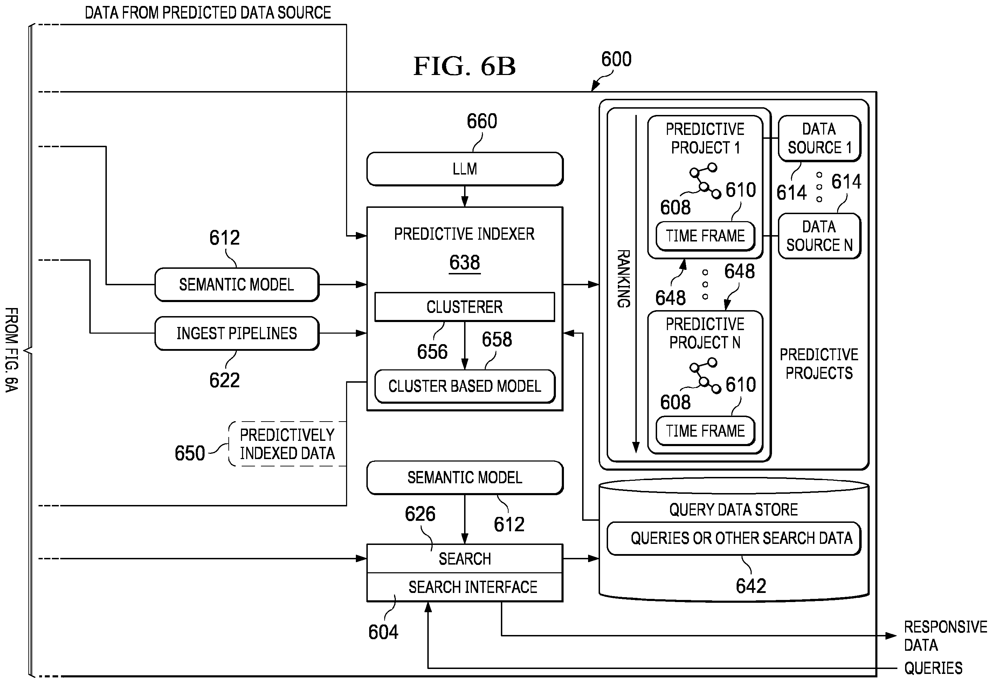

Specifically, the ingest pipelines for data sources may be used to provide (semantically contextualized) data from one or more data sources configured at the data management system to one or more other systems or applications (e.g., only) as that data is needed (or in anticipation of the need for such data) by those systems or applications. One such system or application is an advanced search system. FIGURE 6 depicts one embodiment of such an advanced search system that may be included in, or operate in association with, a data management system. Advanced search system 600 may provide a project definition interface 602 that allows users to define sets of data based on the semantic model 612 of the semantic layer of the data management system (or other criteria) and a search interface 604 to allow users to query data received from data sources according to the concepts defined in the semantic model used by the data management system (or other criteria). For example, using project definition interface 602, a user may define a search project 606 comprising a set of (search project) criteria for definition of a data set. The queries 642 submitted by a user through the search interface 604 may be saved and added to the semantic layer of the data management system. In particular, they may be used for predictive indexing, as will be elaborated on in greater detail elsewhere in this disclosure.

This search project criteria can include the specification of any individual data sources, type of data sources or other criteria by which data or data sources can be defined. In particular this search project criteria may include concepts 608 associated with the semantic model 612 used by the data management system, including higher level abstractions as included in any tier of the semantic model 612 (e.g., including the most abstract tier), The search project criteria may also include a time period (frame) 610. This time period 610 can be defined in almost any manner desired, including by giving bounding times (times, dates, days of the week, months, etc.), a looking backward period (e.g., two week previous, or two weeks previous from a given date), a defined time period (February, the first week in January) or in some other manner.

A set of data sources 614 currently configured at the data management system that are associated with the defined search project 606 can thus be determined based on the search project criteria of that search project. For example, for any concepts 608 of the semantic model 612 specified in the search project criteria for that search project 606, the semantic model 612 may be traversed (e.g., in a reverse direction) starting with that concept 608 (e.g., in a most abstract layer) to determine nodes of (the first most specific tier of the) semantic model 612 joined by one or more edges to that concept 608, and thus the data sources 614 associated with those nodes of the first (least abstract) tier of the semantic model 612 associated with that concept 608. The data sources 614 that are determined to be associated with that concept 608 may then be stored in association with that search project 606.

It is important to note here, that because of the nature of embodiments of the semantic model 612 and the mappings between of nodes of the semantic model 612, and the correlation of data sources to one or more nodes of the first (least abstract) tier of the semantic model 612, a single concept 608 specified in the search project criteria may lead to the determination of multiple distributed heterogeneous data sources in an enterprise that are related to that specified concept 608 through the mappings of the nodes of the semantic model 612. Thus, a user may specifying a search project may not even be aware of the nature, type, number, distribution or other aspects of such data sources but can still define data sets that encompass all such data sources having semantically related data solely by virtue of specifying a semantic concept 608 of interest (e.g., at a highly abstract level) in the search project 606 defining a data set they wish to use.

When (or sometime after) a search project 606 is defined, indexer 616 may obtain data for that search project 606 from the raw data lake 618 in which data from (e.g., all) data sources configured at the data management system is stored as it was received (e.g., according to the original format or schema in which it received). Specifically, the raw data lake 618 may be queried or otherwise accessed to obtain data associated with the data sources determined for that search project for the time period 610 specified in the search project 606.

The obtained raw data associated with the search project 606 may then be indexed and stored in the advanced search system 600 for use (e.g., searching). Indexer 616 may index the raw data obtained for the search project 606 by storing the data 620 obtained from each data source 614 associated with the search project 606 according to the internal schema determined for that respective data source. Specifically for a data source 614 from which raw data associated with the search project 606 was obtained, indexer 616 can determine the ingest pipeline 622 associated with that data source. The ingest pipeline 622 associated with that data source 614 can be used to process the obtained raw data from that data source 614 associated with the search project 606 to represent the data from that data source in the internal schema determined for that data source. The indexed data 620 for that data source 614 as represented in the internal schema for that data source 614 can then be stored in a refined data store 624 in the advanced search system 600 in association with the corresponding search project 606. It will be noted here, that refined data store 624 may be any type of data store and the term refined data store (or lake) is used only to indicate a data store that stores at least some data that may be utilized by the advanced search system 600.

In this manner, data 620 for each data source 614 associated with a search project 606 may be indexed by processing data defined by criteria (e.g., nodes of semantic model 608) of that search project 606 according to the data ingest pipelines 622 corresponding to the data source 614 from which that data originated. Moreover, because the data 620 associated with the search project 606 is now represented in an internal data schema associated with the respective data source 614 from which the data originated, where the data items of those internal schemas are associated with the concepts of the semantic model 612 of the semantic layer of the data management system, the data 620 of that search project 606 has now been semantically indexed.

The data 620 associated with the search project 606 in the refined data store 624 (e.g., as represented in the internal schema associated with those data sources) can then be searched or otherwise accessed or manipulated in the refined data store by a user using a search interface 604 that is part of a search module 626 Such a search module 626 may, for example, be part of a platform for complex data integration, manipulation or visualization such as Databricks, Kibana, or Palantir. Additionally, because the data 620 for the search project 606 has been semantically indexed, the data 620 defined by the search project 606 can be searched, organized, refined or otherwise accessed or manipulated based on the concepts of the semantic model 612 of the semantic layer employed by the data management system (e.g., despite that the data 620 may originate from multiple heterogeneous and distributed data sources that produce different data according to different schemas). For example, data 620 associated with a search project 606 may be formed, accessed, searched or otherwise manipulated according to views, whereby one or more virtual data structures (e.g., tables or the like) can include data from across data sources in a specified format or structure.

To increase the speed of data availability or reduce the processing required for the (semantic) indexing of data associated with a search project 606, certain techniques may be employed by embodiments of the advanced search system 600. In one embodiment, for example, when indexer 616 indexes obtained raw data associated with the search project 606, this raw data may be indexed by a just in time indexer 628 based on portions (also referred to as a chunk or slice) of that data to make indexed data 630 associated with the project available for searching more rapidly. These chunks may be determined based on any number of chunking criteria, such that a set of chunks of the raw data may be determined and each chunk indexed (represented and stored according to the internal schema for a respective data source) using the respective ingest pipeline 622 associated with the data source for that raw data.

In one embodiment, these chunks may be determined by timing criteria such that each represents a time slice (a second, minute, hour, etc., worth) of data across the data sources 614 of the search project from which data is available. The chunking criteria, or the granularity of the chunking criteria (e.g., second vs. minute vs. hour), may be determined by the search project criteria defining the search project 606 for which data is being indexed or the type of content of raw data specified by that search project criteria. Thus, as the chunks of raw data are processed, the corresponding chunks of data 632 represented according to the internal schemas for the data sources that provided that data can be stored in association with the search project 606 in the refined data lake 624 and made available for search through the search interface 604. These chunks may be processed, for example, according to a time ordering such that most recent data is processed before less recent data.

Another approach that may be utilized by embodiments of an advanced search system 600 to improve the speed of data availability and reduce usage of computing resources is to determine if data associated with a search project 606 is already available in the refined data lake 624 (or in a data store associated with the real time analytics portion of the data management system) before obtaining data from the raw data lake and processing that raw data according to the ingest pipelines 622. Accordingly, before obtaining data from the raw data lake in accordance with indexing data for a search project 606, indexer 616 may determine if data associated with the data sources 614 associated with the search project 606 is present in the refined data lake 624 (or the data store of the real time analytics system) for any of the time period 610 defined for that search project 606 (e.g., is present in association with another search project 606). If such data is present, it may be associated with that search project 606 in the refined data lake 624. To avoid even having to copy this data, this association may comprise a link, pointer, or other reference to this previously indexed data stored in association with the search project 606. As such, any raw data corresponding to this already available, previously indexed, data for the search project 606 may not be obtained from the raw data lake 619 when data for the search project 606 is obtained from the raw lake 618 by indexer 616, avoiding redundant indexing (e.g., processing or storage) associated with such already present indexed data in the refined data lake 624.

As can be seen, the presence of indexed data in the refined lake (e.g., before a search project 606 is defined or data for a search project 606 indexed) may significantly increase the speed at which data sets associated with a search project 606 may be accessed (e.g., through search interface 604. Accordingly, in one embodiment the advanced search system 600 may utilize predictive indexer 638 to predictively index data from raw data store 618.

This predictive indexing may be based on the patterns, timing, and type of data defined or searched by users of a data management system. According to some embodiments then, predictive indexer 638 may generate a prediction of one or more data sets that may be requested or accessed in the future. The data corresponding to these predicted data sets can then be indexed (e.g., processed according to the ingest pipelines 622 to represent and store the data in the refined lake 624 according to the internal schema of data sources associated with that data set) such that refined data associated with those predicted data sets can be available if requested (e.g., is ever associated with a search project 606 defined by a user). Because this indexing is predictive, and no need for this data may have yet manifested, this actual processing of raw data according to the ingest pipelines 622 to generate this predictive indexed data may be scheduled by predictive indexer 638 at times when computer resources are relatively available, unburdened, or less expensive, reducing the processing burden placed on the computing systems comprising the data management system.

In certain embodiments then, to predictively index data, a set of predictive projects 648 may be determined using predictive techniques. This set of predictive projects 648 may be determined based on the occurrence of some event or other trigger, at regularly scheduled intervals or otherwise initiated. These predictive projects 648 may define data sets by a set of criteria and a time period. This criteria may include concepts 608 defined by the semantic model 612 of the semantic layer employed by the data management system. Thus, similarly, to search projects 606, data source 614 may be associated with these predictive projects 648. These predictive projects 648 may also be ranked based on a weighting associated with a likelihood of being requested or needed in the future.

One or more of these predictive projects 648 may be selected based on the weighting, the raw data associated with the data sources 614 defined by the selected predictive project 648 obtained from the raw data lake 618, and the ingest pipeline 622 associated with each of the data sources 614 associated with the selected predictive project 648 used to process the raw data from that data source 614 to represent the data from that data source 614 in the internal schema determined for that data source 614. The data for that data source as represented in the internal schema can then be stored in the refined data lake 624 in the advanced search system 600 in association with the predictive project 648. Accordingly, predictively indexed data 650 associated with the selected predictive projects 648 may be available in the refined data lake 624 if it is needed in the future (e.g., is germane to a defined search project 606).

In certain embodiments to determine the set of weighted predictive projects 648 search data (e.g., queries 642) associated with the advanced search system 600 may be maintained Specifically, as users interact with the data management system (e.g., through the interfaces 602, 604 of the advanced search system 600 to define search projects 606 or to submit queries to search data 620 of those search projects 606), the data management system (e.g., advanced search system 600) may log or otherwise track this search data 642 (e.g., search project criteria used to define the search projects 606 or time periods 610 associated with those search projects, queries submitted against those search projects, frequency of queries, time periods when queries were submitted or data sources usage, frequency of data source usage, or almost any other search data desired). This search data 642 may be used by predictive indexer 638 to build, or as input to, a predictive model to determine the predictive projects 648 (e.g., and an associated weighting).

The predictive model employed by embodiments to determine predictive projects 648 may include a cluster based model 658 generated by clusterer 656, a LLM 660 or some combination of a cluster based model 658 and LLM 660. For example, clustering may be performed on search data 642 based on a number of dimensions associated with the search data 642, including the search projects 606 requested (e.g., defined or used), or queries submitted in association with those search projects 606. The dimensions may include, for example, data sets being defined in a search project (e.g., criteria, including semantic concepts 608 used to define such search projects 606), a time frame 610 associated with search projects 606 (e.g., a time that defines the search project data being requested relative from the time the search project was requested), or when that search project 606 was requested (e.g., defined or used, such as the beginning of the month, end of quarter, etc.). The results of this clustering may result in a model 654 comprising a set of clusters that define predictive projects 648 based on a set of criteria (e.g., concepts 608 of the semantic model or other criteria) and a time frame 610 (e.g., defining a time period of associated data for the predictive project 648 or a time frame on which predictive indexing should be triggered). Additionally, there may be a weighting associated with each of those predictive projects 648 determined based on the size of the cluster associated with each predictive project 648.

As another example, an LLM 660 may be utilized to generate a set of predictive projects 648 (e.g., and associated weightings) by creating a prompt for the LLM 660 requesting such a definition of such predictive projects 648 (e.g., and their relative prioritization) where the prompt includes tracked search data 642, such as the criteria defining search projects 606 or queries (e.g., including the semantic concepts 608 or specified data sources 614 associated with such projects 606 or queries). This prompt to the LLM 660 may also include any sort of contextual or other data (e.g., including natural language data) provided by a user when interacting with the data management system (e.g., when defining data sources or their uses).

Thus, generated predictive projects 648 may be selected for predictive indexing (e.g., based on a weighting associated with those predictive projects or based on other criteria). In one embodiment, predictive projects generated by one technique or model (e.g., clustering) may be combined with predictive projects generated by one or more other techniques or models (e.g., using an LLM) to determine a final weighted set of predictive projects 648 from which to select the one or more predictive projects 648 for indexing. The final set of predictive projects 648 may be weighted according to a degree of overlap between the predictive projects generated by the two (or more) predictive models (e.g., the cluster based model 658 and the LLM 660) such that the more overlap there is between a predictive project as generated by one predictive model and a predictive project as generated by another predictive model the higher weight that predictive project 648 (or criteria associated with that predictive project 648) is assigned. Additionally, in some embodiments the weighting associated with one predictive model (e.g., the cluster based model) may be given greater weight based on that predictive model's techniques (e.g., as cluster based models 658 may be deemed more deterministic the predictive projects generated by the cluster based model may be given relative greater weights when determining a final set of predictive projects, etc.).

Once a set of final predictive projects 648 is generated, one or more of these final predictive projects 648 may be selected by predictive indexer 638 based on the weighting and (e.g., at the time specified by the predictive project), the raw data associated with the data sources 614 defined by the selected predictive project 648 obtained from the raw data lake 618 and processed according to the ingest pipeline 622 associated with each of the data sources 614 of that predictive project 648 to represent the data from that data source 614 in the internal schema determined for that data source 614. The data for that predictive project 650 as represented in the respective internal schemas for the data sources can then be stored in the refined data lake 624 in the advanced search system 600 in association with that predictive project 648. As such, if data associated with that predictive project 648 is requested (e.g., in association with a search project 606) that data may be available in the refined data lake and immediately available (e.g., for searching) in association with that search project 606.

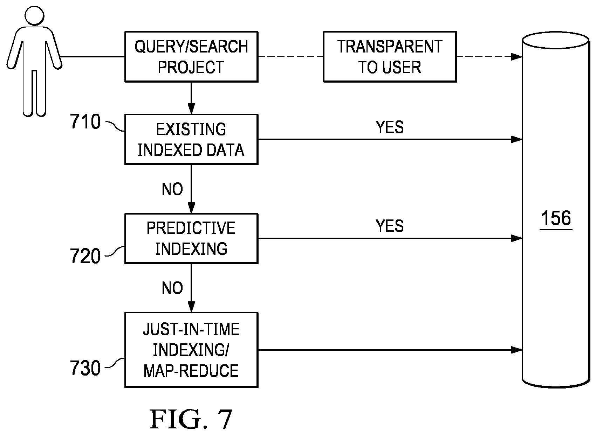

FIGURE 7 depicts one embodiment of a method that may be utilized to index data for advanced search in a data management system. When a user specifies a search project (e.g., a specification of data such as a data set or source, a time period for such data, etc.) or query, a first check may be performed to determine if the data that is associated with that search project or query is already available in the refined data lake or in the real time database on the real time analytics portion of the data management system (STEP 710). The specified data for the data project may be available, for example, because a user has already specified one or more search projects that utilize the data specified in the current search project that can be obtained (or combined with other data) to obtain the data for the requested search project, or because one or more use cases specified such data. It will be noted that the specified data of the requested data project may be available from some combination of data in the refined data lake and real time database and this data may be obtained or collated to provide the data for the requested search project.

Thus, if the data for the requested search project is available it may be collected and stored for the requested search project in the refined data lake (or the requested data may be linked to the requested data project from its current storage location). If, however, there is no currently indexed data corresponding to the requested data for the search project, it can be determined if the requested data for the search project has been predictively indexed (STEP 720). If the data for the requested search project has been predictively indexed, it can be made available for the user to run queries against. If the data is not available from predictive indexing, a just in time index may be created from the requested data from the raw data lake (STEP 730). This just in time indexing may be done in chunks or slices whereby, in one embodiment, the most recently obtained data (or the most recent data that was requested in the search project) may be obtained from the raw data lake and indexed in the refined data lake such that it appears to the user that the requested data is more quickly available.

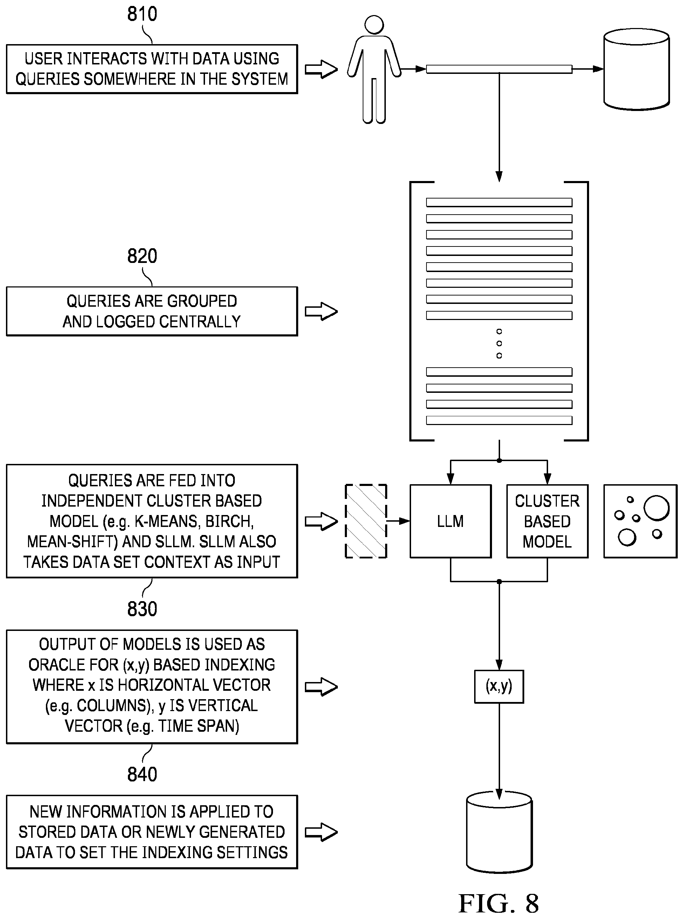

Looking now at FIGURE 8, one embodiment of how an advanced search system may predictively index data is depicted. As users execute queries within the advanced search system (STEP 810) these queries may be grouped and logged (STEP 820). This set of logged queries (e.g., against a data source or set of data sources or search projects) can then be evaluated (STEP 830).

This evaluation may include performing cluster based modeling (e.g., K means, mean-shift, BIRCH, etc.) against that set of queries. The cluster modeling may be usage based, such as how often data items (fields) have been used in queries, how often the data set has been used, etc. This clustering may generate clusters of the set of queries. The set of queries may also be fed into an LLM with a prompt to generate a predictive indexing project. This prompt may include context (e.g., natural language data provided by the user) for a data source or data set. This LLM may be the same LLM that was used to generate the context for the data items of a data source (e.g., as discussed above).

A prompt to the LLM may thus ask the LLM to generate a prediction of what data will be most frequently accessed and when such data will be accessed based on the context of data. The LLM returns a prediction of a next usage of data (e.g., what data from what data sources will be utilized or how much data will be utilized and a time period). This prediction may be defined based on semantic concepts of the semantic model used by the data management system. In certain embodiments, a tuple of two (or more) vectors is returned, identifying a data item (field) (e.g., of a schema of a data source) and a time vector denoting a time period (e.g., the last month, only Mondays of the last three years).

The output of the clustering model and the LLM may be evaluated to determine data from the data sources configured for the data management system to predictively index (e.g., index even in an absence of any specific data request specifically requesting that particular set of data) (STEP 840). This determination may include the creation of a weighted set of predictive projects defined by concepts, data items (fields), or data sources, and a time period. The determination of which data to predictively index can thus comprise a selection of one or more of these predictive projects. Data that it is determined to predictively index (e.g., data from the determined data sources and time period associated with the selected predictive projects) can then be obtained from a raw data lake and processed using the ingest pipelines for the data sources associated with that raw data in order to index the raw data from those data sources in the refined data lake. Namely, the data obtained from the raw data lake for predictive indexing can be semantically contextualized according to the schema defined for that data source by processing it with corresponding ingest pipeline for that data source such that the data from that data source is stored in a format according to the schema defined for that data source. This indexed data can then be used if needed (e.g., associated with a defined search project or searched by the user).

For example, this predictive indexed data can then be utilized if needed when a user submits a search project or query specifying this data. By predictively indexing this data, time can be saved in providing such data to a user while still obtaining the advantages of being able to store raw data in the raw data lake without having to fully process or index all of the data (e.g., when the data arrives from the data sources). Thus, embodiments of an advance search system of a data management system may bifurcate the analysis of data using context and semantic annotations on the data (e.g., associating concepts of a semantic model with the data) to process and index and the data that it is certain that it is needed while still making the data available for ad hoc usage and queries in a manner that saves the resources and time required for indexing all the data. In this manner, a predictive index (predictively indexed data) may be stored in the refined data lake. This predictive indexing may be executed at a time interval (e.g., regularly or semi-regularly or based on a certain criteria) such that there is a predictive index area in the refined data lake where the predictive index stored in that predictive index area gets replaced with a currently determined predictive index when it is determined (e.g., the predictive index gets constantly replaced with the next predictive index).

As can be seen then, an advanced search system of a data management platform may make use of ingest pipelines determined for data sources configured for that data management system to provide semantically contextualized data from one or more data sources when needed (or in anticipation of such data being needed). Other systems or applications of a data management system may also make use of these ingest pipelines to provide semantically contextualized data (e.g., data from data sources formed according to a corresponding internal schema) when needed for other uses. One example of such a system or application is a real time analytics system. Such a real time analytics system may provide data from data sources configured for a data management system (or alerts or notifications based on such data) to applications or other consumers of data based on definitions of data used by those applications. Embodiments of a real time analytics system may allow use cases for data to be specified based on the semantics of the data desired for use by an application (e.g., according to the semantic concepts of the semantic model employed by the data management system) and thus provide the ability to allow the defined use cases to drive the management (e.g., indexing, including processing or semantic contextualization) of data from data sources configured for the data management system.

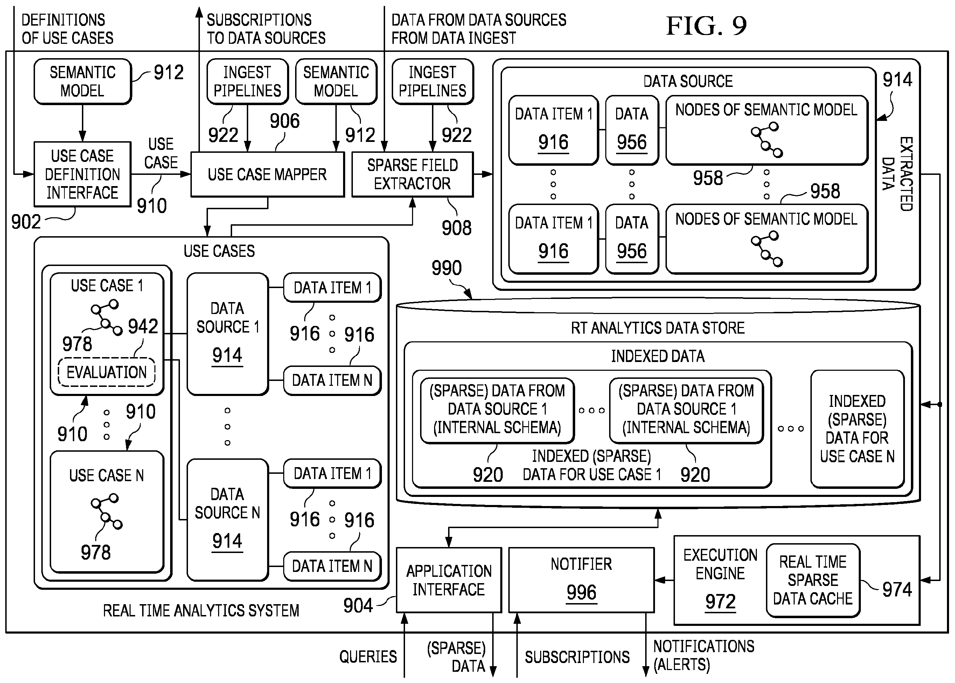

FIGURE 9 depicts one embodiment of such a real time analytics system that may be included in, or operate in association with, a data management system. Real time analytic system 900 may provide a use case definition interface 902 that allows users to define use cases for sets of data based on the semantic model 912 of the semantic layer of the data management system (or other criteria). Real time analytics system 900 may also provide application interface 904 to allow applications (or other consumers) to query or otherwise access data received from data sources according to the concepts defined in the semantic model used by the data management system (or other criteria).

For example, a software development kit (SDK) or other interface or tools may be provided through use case definition interface 902 based on the semantic model 912 of the semantic layer of the data management system. Such a use case definition interface 902 may allow a user to navigate or otherwise interact with the concepts (e.g., nodes) of the semantic model 912 to define a use case 910 based on a set (one or more) concepts 978 of the semantic model 912. These use case criteria (e.g., semantic concepts 978) defining a use case 910 can thus include concepts specified at any tier of the semantic model 912 (e.g., including the most abstract tier), or other criteria by which data or data sources can be defined. In one embodiment, for example, a use case 910 may be a standing query for data defined by one or more concepts 978 of the semantic model 912.

In some embodiments, a use case may also comprise an evaluation 942 to be performed against data (e.g., the data set) defined by that use case 910. This evaluation 942 may define one or more conditions for which the data may be evaluated (e.g., if certain events occur more than a certain number of times) and a corresponding result (e.g., action) to be taken if those conditions are met (e.g., raise an alert).

Once a use case 910 is defined, user case mapper 906 may determine a set of data sources associated with the defined use case 910 based on the use case criteria (e.g., semantic concepts 978) defined for that use case 910. This determination may be accomplished by mapping the concepts of the semantic model 912 specified by the use case 910 to data sources configured for the data management system. This mapping may occur, for example, when the use case 610 is initially defined or subsequently when a mapping triggering event takes place. Such a mapping triggering event may comprise an alteration to the semantic model 912, the addition of a new data source to the data management system or ingest pipelines 922 or another type of event. In one embodiment, to accomplish this mapping for each concept of the semantic model 978 specified in the criteria defining the user case 910, the semantic model 912 may be traversed (e.g., in a reverse direction) starting with that concept 978 (e.g., in a most abstract layer) to determine nodes of (the first most specific tier of the) semantic model 912 joined by one or more edges to that concept 678, and thus the data sources 914 associated with those nodes of the first (least abstract) tier of the semantic model 912 associated with that concept 678. The data sources 914 that are determined to be associated with that concept 678 may then be stored in association with that search project 606.

Additionally, because the internal data schema for each of those data sources 914 determined for a use case 910 is also known (e.g., as part of the ingest pipeline 922 for that data source 913) wherein the data items of the internal schema are also mapped to corresponding concepts of the semantic model 912, the internal data schema for a data source 914 may be evaluated by use case mapper 906 to determine the data items of the internal schema for that data source 914 that are associated with the use case 910. These data items 916 may thus be associated with the data source 914 determined for that use case 910. Thus, for each use case 910 defined according to concepts 978 of the semantic model 912, not only may each data source 914 associated with those concepts 978 be determined but, additionally, the specific data items 916 of internal schema of that data source 914 associated with those concepts 978 may also be determined and stored in association with the use case 910.

Real time analytics system 900 may thus receive raw data from those data sources 914 as that raw data is received by the data management system. Specifically, a data ingest module of the data management system may provide a subscription service whereby subscribers can subscribe to feeds (or raw data received) from data sources (or types of data sources, etc.). Accordingly, when a use case 910 is mapped to a set of data sources 914 by use case mapper 906 may subscribe to feeds corresponding to those data sources 914 for that use case 910 through the subscription service of the data ingest module. Consequently, when (raw) data is received from those data sources 914 by the data ingest module it may be provided to the real time analytics system 900 through the subscription service.

When the real time analytics system 900 receives this raw data from a data source, this data may be received by sparse field extractor 908. Sparse field extractor 908 may determine each use case 910 that is associated with that data source. For each of the determined use cases 910, sparse field extractor 908 can determined for that data source 914 (e.g., for which data was received), the set of data items 916 that should be extracted from the raw data and indexed for that use case 910 (e.g., the set of data items 916 associated with that data source 914 for that use case 910). Based on these determined set of sparse data items 916 (e.g., the subset of data items of the internal schema for that data source 914 that should be extracted for the use case 910), the ingest pipeline 922 for that data source 914 may be utilized to extract that (sparse) set of data items 916 from the incoming raw data from that data source.

In particular, only the portions of the ingest pipeline 922 (e.g., extraction functions) associated with those (sparse) data items 916 associated with that data source 914 for that use case 910 may be executed in order to index (e.g., semantically contextualize and store) data 956 for those data items 916 according to the internal schema defined for those data items 916. Thus, from data received from a data source 914, sparse field extractor 908 may extract data 956 associated with each data item 916 of the internal schema for that data source 914 using the corresponding data extraction function of the ingestion pipeline such that extracted data 956 is semantically contextualized according to the nodes 958 of the semantic model 912 associated with that data item 916 in the internal schema for that data source 914.

The extracted (sparse) data 956 from that data source 914 may be stored in association with the data source 914 or use case 910 in the real time analytics data store 990 where it is available for access by any application that wishes to consume such data. Thus, sparse data 920 associated with each data source 914 for a use case 910 may be extracted and stored (in real time or dynamically) as data from that data source 914 is received at the data management system where it is (substantially immediately) available for access by any application that wishes to consume such data.

An execution engine 972 of the real time analytics system 900 may thus be adapted to execute queries from applications of other consumers and execute them against the data currently in the real time analytics data store 990. Applications can thus be adapted to access and use the data of these use cases 910 through the execution engine 972 by searching (e.g., based on semantic concepts associated with the semantic model 912, use cases 910, data items 916, or data 956.

As can be seen then, instead of processing all data from all data sources configured for a data management system to make such data available for use by applications, use cases 910 may drive the indexing (e.g., processing and semantic contextualization) of data received from data sources. By allowing these use cases 910 to drive this indexing of data from the data sources the actual amount of processing (and storage) required to index data may be significantly reduced, as only the actual data to be utilized may be determined and only this data indexed. Accordingly, by reducing the processing requirements and time required to index data for such use cases 910, this data may also be made available for use in real time or dynamically as it is received, allowing applications (e.g., analytics applications or cybersecurity applications, etc.) to implement real-time or near real time dynamic processing and actions on such data.

As discussed above, certain use cases 910 may also include an evaluation 942 to be performed on data associated with the use case 910, where that evaluation 942 may be defined by a set of evaluation criteria that may be utilized to query or otherwise process the data 620 associated with the use case 910 to determine if certain criteria have been met (e.g., the processing of the data had certain results). Additionally, the evaluation 942 may include an action such as raising an alarm or the like. Accordingly, execution engine 972 of the real time analytics system 900 may execute the evaluation 942 of use cases 910 including such an evaluation 942 to determine if the conditions of that evaluation 942 have been met, and take the corresponding actions associated with those evaluations 942 if so.

To speed the performance of those evaluations 942 against data 620 associated with a use case 910 and to aid in performing evaluations 942 that have to do with "windowing" criteria (e.g., how many events occurred within some previous time period) the execution engine 972 may maintain a sparse data cache 974 to store data processed by the sparse field extractor 908 in some previous time period (e.g., one hour, 24 hours, etc.). In one embodiment, therefore, all data 958 for data items 916 indexed for data sources 914 by the sparse field extractor 908 of the real time analytics system 900 may also be provided to the execution engine 972 where that data is stored in the sparse data cache 974 for some period associated with the cache 974 (e.g., a cache replacement time period). The evaluations 942 of the use cases 910 may thus be carried out against the data in this sparse data cache 974 or against the data 620 stored in the real time analytics data store 990.

In certain cases, the action associated with an evaluation 942 may be to send (or otherwise provide) a notification (e.g., an alert). Such notifications may be provided by the execution engine 972 using a notification system 996 which may be a subscriber based notification system or the like, such that applications that wish to receive such notifications can subscribe to such notifications (e.g., use cases) through this notification system 996.

Those skilled in the relevant art will appreciate that the invention can be implemented or practiced with other computer system configurations including, without limitation, multiprocessor systems, network devices, mini-computers, mainframe computers, data processors, and the like. Embodiments can be employed in distributed computing environments, where tasks or modules are performed by remote processing devices, which are linked through a communications network such as a LAN, WAN, and/or the Internet. In a distributed computing environment, program modules or subroutines may be located in both local and remote memory storage devices. These program modules or subroutines may, for example, be stored or distributed on computer-readable media, including magnetic and optically readable and removable computer discs, stored as firmware in chips, as well as distributed electronically over the Internet or over other networks (including wireless networks). Example chips may include Electrically Erasable Programmable Read-Only Memory (EEPROM) chips. Embodiments discussed herein can be implemented in suitable instructions that may reside on a non-transitory computer readable medium, hardware circuitry or the like, or any combination and that may be translatable by one or more server machines. Examples of a non-transitory computer readable medium are provided below in this disclosure.

Although the invention has been described with respect to specific embodiments thereof, these embodiments are merely illustrative, and not restrictive of the invention. Rather, the description is intended to describe illustrative embodiments, features and functions in order to provide a person of ordinary skill in the art context to understand the invention without limiting the invention to any particularly described embodiment, feature or function, including any such embodiment feature or function described. While specific embodiments of, and examples for, the invention are described herein for illustrative purposes only, various equivalent modifications are possible within the scope of the invention, as those skilled in the relevant art will recognize and appreciate.

As indicated, these modifications may be made to the invention in light of the foregoing description of illustrated embodiments of the invention and are to be included within the scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope of the invention as set forth. Therefore, many modifications may be made to adapt a particular situation or material to the essential scope of the invention.

Reference throughout this specification to "one embodiment", "an embodiment", or "a specific embodiment" or similar terminology means that a particular feature, structure, or characteristic described in connection with the embodiment is included in at least one embodiment and may not necessarily be present in all embodiments. Thus, respective appearances of the phrases "in one embodiment", "in an embodiment", or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

Embodiments discussed herein can be implemented in a set of distributed computers communicatively coupled to a network (for example, the Internet). Any suitable programming language can be used to implement the routines, methods or programs of embodiments of the invention described herein, including R, Python, C, C++, Java, JavaScript, HTML, or any other programming or scripting code, etc. Other software/hardware/network architectures may be used. Communications between computers implementing embodiments can be accomplished using any electronic, optical, radio frequency signals, or other suitable methods and tools of communication in compliance with known network protocols.

Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, or otherwise controlled by another process, such as an operating system, kernel, etc. The routines can operate in an operating system environment or as stand-alone routines. Functions, routines, methods, steps and operations described herein can be performed in hardware, software, firmware or any combination thereof.

Embodiments described herein can be implemented in the form of control logic in software or hardware or a combination of both. The control logic may be stored in an information storage medium, such as a computer-readable medium, as a plurality of instructions adapted to direct an information processing device to perform a set of steps disclosed in the various embodiments. Based on the disclosure and teachings provided herein, a person of ordinary skill in the art will appreciate other ways and/or methods to implement the invention.

A "computer-readable medium" may be any medium that can contain, store, communicate, propagate, or transport the program for use by or in connection with the instruction execution system, apparatus, system or device. The computer readable medium can be, by way of example only but not by limitation, an electronic, magnetic, optical, electromagnetic, infrared, or semiconductor system, apparatus, system, device, propagation medium, or computer memory. Such a computer-readable medium shall generally be machine readable and include software programming or code that can be human readable (e.g., source code) or machine readable (e.g., object code). Examples of non-transitory computer-readable media can include random access memories, read-only memories, hard drives, data cartridges, magnetic tapes, floppy diskettes, flash memory drives, optical data storage devices, compact-disc read-only memories, and other appropriate computer memories and data storage devices.

As used herein, the terms "comprises," "comprising," "includes," "including," "has," "having," or any other variation thereof, are intended to cover a non-exclusive inclusion. For example, a process, product, article, or apparatus that comprises a list of elements is not necessarily limited only to those elements but may include other elements not expressly listed or inherent to such process, product, article, or apparatus.

Furthermore, the term "or" as used herein is generally intended to mean "and/or" unless otherwise indicated. For example, a condition A or B is satisfied by any one of the following: A is true (or present) and B is false (or not present), A is false (or not present) and B is true (or present), and both A and B are true (or present). As used herein, a term preceded by "a" or "an" (and "the" when antecedent basis is "a" or "an") includes both singular and plural of such term, unless clearly indicated within the claim otherwise (i.e., that the reference "a" or "an" clearly indicates only the singular or only the plural). Also, as used in the description herein and throughout the meaning of "in" includes "in" and "on" unless the context clearly dictates otherwise.

## Claims

1. A method for indexing data for search in a data management system, comprising:
storing raw data received the one or more data sources at a data management system, the raw data stored in the form data is received from each of the one or more data sources;
generating a set of predicted data sets based on a predictive model, wherein each of the predictive data sets is associated with a criteria and a time period;
in advance of a request for that data, obtaining stored raw data associated with selected ones of the set of predicted data sets based on the criteria and time period; and
indexing the obtained stored raw data for search at the data management system.

2. The method of claim 1, wherein the predictive model include a cluster based model or a large language model (LLM).

3. The method of claim 2, wherein generating the set of predictive data sets utilizing a cluster based model comprises clustering search data associated with users' interaction with the data management system based on one or more dimensions.

4. The method of claim 3, wherein the one or more data sets are ranked based on a likelihood weighting, and the selected ones of the set of predictive data sets are selected based on the likelihood weighting.

5. The method of claim 4, wherein the likelihood weighting for each of the set of predictive data sets is based on a cluster size associated with that predictive data set.

6. The method of one of claims 3 to 5, wherein generating the set of predictive data sets comprises generating a prompt for the LLM requesting predictive data sets, wherein the prompt includes search data associated with the users' interaction with the data management system.

7. The method of claim 6, wherein a set of predictive data sets includes a first set of predictive data sets generated from the cluster based model, and a second set of predictive data sets generated using the LLM, and wherein the selected ones of the set of predictive data sets are selected based on a likelihood weighting derived from an overlap between the first set of predictive data sets and the second set of predictive data sets.

8. A non-transitory computer readable medium, comprising instructions for indexing data for search in a data management system, including instructions which, when executed by one or more processors, cause the one or more processors to carry out the method of anyone of claims 1 to 7.

9. A system, comprising:
a processor; and
a non-transitory computer readable medium, comprising instructions for:
storing raw data received the one or more data sources at a data management system, the raw data stored in the form data is received from each of the one or more data sources;
generating a set of predicted data sets based on a predictive model, wherein each of the predictive data sets is associated with a criteria and a time period;
in advance of a request for that data, obtaining stored raw data associated with selected ones of the set of predicted data sets based on the criteria and time period; and
indexing the obtained stored raw data for search at the data management system.

10. The system of claim 9, wherein the predictive model include a cluster based model or a large language model (LLM).

11. The system of claim 10, wherein generating the set of predictive data sets utilizing a cluster based model comprises clustering search data associated with users' interaction with the data management system based on one or more dimensions.

12. The system of claim 11, wherein the one or more data sets are ranked based on a likelihood weighting, and the selected ones of the set of predictive data sets are selected based on the likelihood weighting

13. The system of claim 12, wherein the likelihood weighting for each of the set of predictive data sets is based on a cluster size associated with that predictive data set.

14. The system of one of claims 11 to 13, wherein generating the set of predictive data sets comprises generating a prompt for the LLM requesting predictive data sets, wherein the prompt includes search data associated with the users' interaction with the data management system.

15. The system of claim 14, wherein a set of predictive data sets includes a first set of predictive data sets generated from the cluster based model, and a second set of predictive data sets generated using the LLM, and wherein the selected ones of the set of predictive data sets are selected based on a likelihood weighting derived from an overlap between the first set of predictive data sets and the second set of predictive data sets.
